(19) Europäisches Patentamt
European Patent Office
Office européen des brevets

(11) **EP 3 482 546 B1**

(12) **EUROPEAN PATENT SPECIFICATION**

(45) Date of publication and mention
of the grant of the patent:
**07.09.2022 Bulletin 2022/36**

(21) Application number: **17739674.4**

(22) Date of filing: **07.07.2017**

(51) International Patent Classification (IPC):
***H04L 9/40*** *(2022.01)*  ***H04L 51/08*** *(2022.01)*

(52) Cooperative Patent Classification (CPC):
**H04L 63/105; H04L 51/08; H04L 63/0428;**
**H04L 51/00**

(86) International application number:
**PCT/GB2017/052009**

(87) International publication number:
**WO 2018/007832 (11.01.2018 Gazette 2018/02)**

(54) **SYSTEM FOR SECURE ELECTRONIC MESSAGE TRANSMISSION**

SYSTEM ZUR SICHEREN ELEKTRONISCHEN NACHRICHTENÜBERTRAGUNG

SYSTÈME DE TRANSMISSION SÉCURISÉE DE MESSAGES ÉLECTRONIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2016 GB 201611924**
**16.12.2016 GB 201621476**

(43) Date of publication of application:
**15.05.2019 Bulletin 2019/20**

(73) Proprietor: **Mailock Limited**
**Fareham, Hampshire PO15 5SH (GB)**

(72) Inventor: **HOLLAND, Paul**
**Fareham**
**Hampshire PO15 5SH (GB)**

(74) Representative: **CSY London**
**Helios Court**
**1 Bishop Square**
**Hatfield**
**Hertfordshire AL10 9NE (GB)**

(56) References cited:
**US-A1- 2006 230 461    US-A1- 2007 086 592**

• **MAR KHENG KOK ET AL: "Secure Email
Attachment as a Service (SeaS)", 2015
INTERNATIONAL CONFERENCE ON CLOUD
COMPUTING RESEARCH AND INNOVATION
(ICCCRI), IEEE, 26 October 2015 (2015-10-26),
pages 106-111, XP032875373, DOI:
10.1109/ICCCRI.2015.33 [retrieved on
2016-02-26]**

**Description**

The present invention relates to a system for secure transmission of electronic mail (email) and other forms of electronic messaging.

It is estimated that nearly 200 billion emails are currently sent every day. Many contain sensitive information or confidential attachments. However with current email systems it is relatively easy for hackers to intercept emails and access their potentially sensitive content.

Secure email systems have been developed in which both the sender and receiver need to sign up to a private email service. However this requires the sender and the recipient to use a bespoke email service which may not use their usual or preferred email application or email addresses. An alternative approach is for the email to be sent to and stored on a secure central server. However, this may place heavy processing and storage demands on the central server, and remove the ability of the sender to remain in control of the information which is sent.

Systems have been developed which allow secure data storage and sharing over cloud based networks. Such systems typically encrypt data files before uploading them to public cloud storage, while maintain the ability to share the data files. However, in such systems a user device is only able to make decisions about a level of security required for a particular recipient based on information which that user device holds about the recipient. Since the amount of information which may be held about another user may be restricted due to confidentially requirements and data governance regulations, this may limit the ability of the user device to make an assessment about a required level of security.

US2006230461A1 discloses a system for secure communication comprising a secure electronic messaging server which is accessible by the public and a database for storing data of messaging users. The data comprises the tracking of trust establishing out-of-band verification and the monitoring of the trust relations derived thereof, messaging user-based instructions related to the handling of incoming mails, wherein the instructions comprise information related to an at least one security level chosen by the messaging user.

US2007086592A1 discloses a method and system for determining the reputation of a sender for sending desirable communications. The reputation system identifies senders of communications by keys sent along with the communications. Once the reputation of a sender is established, the reputation system can discard communications from senders with undesired reputations, provide to the recipient communications from senders with desired reputations, and place in a suspect folder communications from senders with an unknown reputation.

"Secure Email Attachment as a Service (Seas)" by Mar Kheng Kok et al, in the proceedings of the International Conference on Cloud Computing Research and Innovation (ICCCRI), 2015, pp. 106-111, describes Secure Email Attachment as a Service (SeaS). SeaS combines corporate email servers with offloading email attachments storage and management to a cloud-based storage.

According to one aspect of the present invention there is provided a secure system core for use in sending a secure electronic message from a sender device to a receiver device as defined in claim 1.

Such a secure system core allows a record to be kept of a user's participation in the secure electronic message system, while allowing the sender to remain in control of its challenge parameters and the electronic message payload. Thus, the secure system core may facilitate the derivation of the security metric, while maintaining the anonymity of the email content and the challenge parameters. The present invention may provide the advantage that, by providing the system core with a security metric module arranged to derive a security metric associated with the user based on the record of the user's participation in the secure email system, an interrogating party can gain an understanding of factors such as the number, frequency and nature of connections and the success or failure rate of associated communication challenges, while maintaining anonymity of the contributing factors. This in turn may allow a sender device to make decisions about a security level required for an electronic message.

The electronic message may be, for example, an electronic mail (email), or other form of electronic messaging such as an instant message, a personal message or a text message. The storage means may be any form of computer storage such as one or more hard drives and/or solid-state memory.

The security metric module is arranged to store the security metric in the storage means. Preferably the security metric is stored as part of a user profile in the storage means. This may facilitate later retrieval of the security metric.

The system may further comprise means for updating a user profile to record a successful or unsuccessful communication between a sender and a receiver. This may allow the security metric to be updated.

Preferably the security metric module is arranged to recalculate the security metric on an ongoing basis. For example, the security metric may be recalculated as secure messages are exchanged, and/or based on other events such as a change in status of a node. Thus the security metric may evolve in dependence on the user's participation in the system, and with whom they communicate.

Preferably the security metric module is arranged to communicate the security metric to another user.

The secure system core may comprise means for extracting a security metric associated with the identifier from the storage means.

The identifier may be an identifier of a recipient of an electronic message. For example, the identifier may be the email address of the recipient. The request may also include an identifier of the sender, such as the sender's email address. The secure system core may comprise means for creating a user profile, storing the user profile in the storage means, and/or updating the user profile. The secure system core may further comprise means for creating and storing a record with information about the electronic message. The record may be stored as part of the user profile.

The information released to the receiver device comprises a storage location of an encrypted information file, and an information file decryption key.

In one embodiment the system core may determine whether the user's response matches a response supplied by the sender. In this case the system core may further comprise:

means for receiving a user's response from the receiver device;
means for extracting a response hash and a hash key from the information file;
means for comparing the hash of the user's response with the response hash extracted from the information file in order to determine whether the user's response matches a response supplied by the sender; and
means for sending to the receiver device an indication of whether the user's response matches the response supplied by the sender.

Preferably the security metric module is arranged to derive the security metric using a centrality measure to take into consideration the number and quality of connections a node may have.

The security metric module may be arranged to derive the security metric based on at least one of:

(a) a base value of the user as a node;
(b) a reflected value of nodes with whom the user is connected following a successful ID verification;
(c) the number of nodes and their cumulative value as confirmed identity parties;
(d) the frequency of communication between the user and its connected nodes;
(e) how recently the user has communicated securely; and
(f) the nature of nodes with whom the user is connected following a successful ID verification.

In one embodiment, the security metric module may be arranged to provide a multi-bit record containing a plurality of parameters which contribute to the security metric. This may allow a sender device to make a more sophisticated assessment of a required security level, while still not revealing details of the communications made.

A corresponding sender device may also be provided. Thus, according to another aspect of the invention there is provided a secure electronic message module for use in sending an electronic message from a sender device to a receiver device as defined in claim 11.

This may allow the sender to remain in control of the email payload and the challenge parameters, while allowing the secure system core to derive the security metric.

The identifier may be an identifier of a recipient of an electronic message. For example, the identifier may be the email address of the recipient. The request may also include an identifier of the sender, such as the sender's email address.

The module may be arranged to enforce secure communication based on the received security metric. Alternatively or in addition, the module may be arranged to display a security level to a user of the module.

In one embodiment, the secure electronic message module may be arranged to set a security level used with electronic message to be communicated to the user based on the received security metric. For example, lighter touch security measures, which may require less processing and/or less user intervention, may be used if the security metric is relatively high, while higher security measures may be used if the security metric is relatively low. A plurality of different security levels could be used in dependence on the value of the security metric.

As an example, the module may be arranged to set a level of ID validation that is required before the recipient can access the electronic message. For example, the module may be arranged to require (or not to require) a challenge and response to be used in dependence on the received security metric. The module may also be arranged to set the number and/or nature of challenges that are required, in dependence on the value of the security metric.

As another example, the module may be arranged to set an encryption level of the electronic message payload in dependence on the received security metric. Thus a lower level encryption, which is less secure but requires less processing, could be used if the security metric is relatively high, while a higher level encryption, which is more secure but requires more processing, could be used if the security metric is relatively low.

Alternatively or in addition, the module may be arranged to display a "traffic light" system to surface the security metric at the point of the sender authoring a secure communication. This may allow the sender to make a decision about the required security level.

According to another aspect of the invention there is provided a secure electronic message system comprising a secure system core in any of the forms described above, and a module in any of the forms described above. The system may also include a receiver device.

According to another aspect of the invention there is provided a method for use in a secure electronic message system as defined in claim 14.

The secure electronic message system in any of the forms described above may comprise a secure email module arranged to store an encrypted email payload in a data storage environment accessible by third parties, and to store information allowing the retrieval of the encrypted email payload in a secure system core. The module may be part of the secure electronic message system described above.

The above aspect of the invention may provide the advantage that, by storing the encrypted email payload in a data storage environment accessible by third parties, and storing information allowing the retrieval of the encrypted email payload in a secure system core, a secure email system can be provided in which the sender can remain in control of the email payload. Furthermore, processing and storage requirements of the system core can be relatively low, which may reduce the cost and complexity of the system and allow the system to be easily expanded. In addition, privacy issues which may arise if the system core were to store the email can be avoided.

The email payload may comprise, for example, an email body and/or any attachments.

Preferably the data storage environment to be used is configurable by a sender of the email. This can allow the sender to store the encrypted email payload in an environment which is most appropriate to their needs. For example, the storage environment may be a cloud storage service. This may provide a simple and convenient mechanism for storing the encrypted email payload in a way in which it may ultimately be accessed by a recipient of the email. Alternatively, the data storage environment may be provided by the sender, or by an organisation or enterprise with which the sender is associated.

The module comprises means for extracting an email payload (such as an email body) from an email, means for encrypting the email payload, and means for storing the encrypted email payload in the storage environment. For example, the email payload may be encrypted using a pseudo-random encryption key generated by an algorithm. The encrypted email payload is decryptable using an email decryption key. This can ensure that the email payload can only be read by an entity in possession of the email decryption key. The encryption process may use a symmetric key scheme, in which the encryption and decryption keys are the same, or an asymmetric scheme using a public and private key. In the latter case the encryption key may be private and the decryption key public, or vice versa.

The module further comprises means for storing the email decryption key and the storage location of the encrypted email payload in an information file. This may provide a mechanism by which the intended recipient can ultimately access the email payload.

The module comprises means for receiving a challenge and a response from a sender of the email for use in allowing retrieval of the encrypted email payload. This can provide a way in which the identity of the recipient can be verified. The challenge and response may be, for example, a security question and a security answer, or an alternative method of verification.

The module further comprises means for applying a hash function to the response using a hash key, to yield a response hash. The hash function may be a one-way or cryptographic hash function which is difficult or practically impossible to invert. This may allow a response which is provided by a recipient to be compared to the response supplied by the sender without revealing the response itself.

The module further comprises means for storing the challenge, the response hash, and the hash key in an information file. The information file may be the same as an information file in which the email decryption key and the storage location of the encrypted email payload are stored, although they could be stored in different files.

In some cases an email to be sent may include one or more attachments. In order to manage attachments, the module may comprise means for extracting an attachment from an email, means for encrypting the attachment, and means for storing the encrypted attachment in the storage environment. The encrypted attachment is preferably decryptable using an attachment decryption key. The attachment decryption key and the storage location of the encrypted attachment may be stored in an information file, which may be the same as or different from the information file used to store the email decryption key, the storage location of the encrypted email body, the security question, the answer hash, and/or the hash key. The information file is preferably not made available to the recipient in full, but elements of its content may be surfaced once the recipient has successfully answered the challenge.

The secure email module further comprises means for encrypting the or each information file. The or each information file is decryptable using an information file decryption key.

The secure email module further comprises means for storing the encrypted information file in a storage environment from which it is accessible by a recipient and/or the secure system core. For example, the storage environment may be the same as that used to store the encrypted email body. Alternatively the encrypted information file could be sent to and stored at or by the system core. The information file decryption key and the storage location of the encrypted

information file are sent to the secure system core. As discussed below, this can allow the system core to later release the information file decryption key and the storage location of the encrypted information file to the recipient under certain conditions. Alternatively, the encrypted information file itself could be sent to the system core.

In an alternative embodiment, the secure email module may further comprise means for jointly establishing the information file decryption key with a recipient device. This may be achieved, for example, using a key exchange technique such as the Diffie-Hellman Key Exchange. In this embodiment the need to transmit the information file decryption key to the secure system core may be avoided.

The secure email module further comprises means for sending information about the email to the secure system core. The information may include one or more of: the email address of the sender, the email address of the recipient, the subject of the email (derived from the subject line), whether there are any attachments, the time of the email, and the date of the email. This information may allow the system core to identify the email.

In response to information about an email received from a secure email module, the system core may generate an identifier for that email. The identifier is preferably a unique identifier, such as a globally unique identifier (GUID). This identifier may be sent from the system core to the secure email module. Thus the secure email module further comprises means for receiving an identifier of the email from the secure system core.

The secure email module further comprises means for sending a generic email to a recipient, the generic email containing a link to the system core, and the identifier of the email. This can notify the recipient that a secure email has been sent, and provide the means by which they can initiate its receipt.

Preferably the email to be sent includes an email body and an email subject, and the generic email includes the email subject. The generic email may also include the sender email address and/or name.

In any of the above embodiments, the email payload (e.g. email body and any attachments) is preferably not sent to the system core.

The secure email module may be used to receive secure emails sent by another party/device. Thus the secure email module in any of the forms described above may be adapted to receive a secure email.

The secure electronic message system in any of the forms described above may further comprise a secure email module which is arranged to receive a secure email. The secure email module may be arranged to obtain, from a secure system core, information allowing the retrieval of an encrypted email payload from a storage environment accessible by third parties, and to use the information to download the encrypted email payload.

Preferably the module further comprises means for receiving a link to the system core and an identifier of the email from a sender of the email, means for following the link, and means for sending the identifier to the system core. The link to the system core and an identifier of the email may be contained, for example, in a generic email sent by the sender (e.g. the sender's secure email module).

When the system core receives the identifier, it may send back information which enables the secure email module to obtain the information file. Thus the secure email module may further comprise means for receiving a storage location of an encrypted information file and an information file decryption key from the system core. Alternatively, the secure email module may further comprise means for jointly establishing an information file decryption key between the sender device and the receiver device.

The secure email module may further comprise means for downloading an encrypted information file from the storage environment, and means for decrypting the information file using the information file decryption key.

Alternatively, if the information file is stored at or by the system core itself, then the system core may send the information file to the secure email module. Thus the secure email module may further comprise means for receiving an information file from the system core.

The secure email module may further comprise means for extracting a challenge from the information file. The module may further comprise means for providing the challenge to and means for receiving a response from a user of the secure email module. The module may further comprise means for determining whether the user's response matches a response supplied by the sender. This can allow the recipient to verify that they are the intended recipient.

The secure email module may further comprise means for extracting a storage location of an encrypted email payload and email decryption key from the information file if it is determined that the user's response matches the response supplied by the sender.

The secure email module may further comprise means for downloading the encrypted email payload from the storage environment using the extracted storage location, and means for decrypting the email payload using the extracted email decryption key.

The secure email module may further comprise means for displaying the decrypted email payload. For example, the secure email module may interact with a general purpose email application in order to display the decrypted email payload.

The secure email module may further comprising means for sending a message to the system core indicating that the email has been opened by the intended recipient if it is determined that the user's response matches the response supplied by the sender. This may allow a log to be maintained of who has read the email, and/or when (using a date or time stamp), and/or on what device and/or where (using a location stamp).

In one embodiment the secure email module itself may determine whether the user's response matches the response supplied by the sender. In this case means for determining whether the user's response matches a response supplied by the sender may comprise:

means for extracting a response hash and a hash key from the information file;

means for performing a hash function on the user's response using the hash key; and

means for comparing the hash of the user's response with the response hash extracted from the information file in order to determine whether the user's response matches the response supplied by the sender.

This can allow the recipient to verify that they are the intended recipient, without requiring the response itself to be revealed.

In another embodiment the system core may determine whether the user's response matches the response supplied by the sender. In this case the means for determining whether the user's response matches a response supplied by the sender may comprise:

means for sending the user's response to the system core; and

means for receiving from the system core an indication of whether the user's response matches the response supplied by the sender.

This can allow the recipient to verify that they are the intended recipient, without requiring the response hash to be made available to the secure email module.

The secure electronic message system in any of the forms described above may comprise a secure email module for use in receiving an email sent from a sender to a recipient, the secure email module comprising:

means for receiving a link to a system core and an identifier of the email;

means for following the link;

means for sending the identifier of the email to the system core;

means for receiving a storage location of an encrypted information file from the system core;

means for obtaining an information file decryption key;

means for downloading the encrypted information file from the storage location;

means for decrypting the information file using the information file decryption key;

means for extracting a challenge from the information file,

means for providing the challenge to and for receiving a response from a user of the secure email module;

means for determining whether the user's response matches a response supplied by the sender;

means for extracting a storage location of an encrypted email payload and email decryption key from the information file if it is determined that the user's response matches the response supplied by the sender;

means for downloading the encrypted email payload using the extracted storage location; and

means for decrypting the email payload using the extracted email decryption key.

The information file decryption key may be obtained from the system core. Alternatively, the information file decryption key may be jointly established between the sender and recipient using a key exchange technique such as the Diffie-Hellman Key Exchange.

In one embodiment the secure email module itself may determine whether the user's response matches the response supplied by the sender. In this case the means for determining whether the user's response matches a response supplied by the sender may comprise:

means for extracting a response hash and a hash key from the information file;

means for performing a hash function on the user's response using the hash key; and

means for comparing the hash of the user's response with the response hash extracted from the information file in order to determine whether the user's response matches the response supplied by the sender.

In another embodiment the system core may determine whether the user's response matches the response supplied by the sender. In this case the means for determining whether the user's response matches a response supplied by the sender may comprise:

means for sending the user's response to the system core; and

means for receiving from the system core an indication of whether the user's response matches the response supplied by the sender.

In any of the above aspects, the secure email module may be a plugin to an email application, such as a general purpose email application. This may allow the sender and/or receiver to use their preferred or usual email application for sending secure emails. Alternatively, the secure email module may be provided as a standalone application installable on a user device.

The secure electronic message system in any of the forms described above may comprise a user device for sending and/or receiving secure emails, the device comprising means for composing and/or displaying an email, and a secure email module in any of the forms described above. The user device may be any type of processing device, such as a desktop computer, laptop, tablet device, handheld device or smartphone. The device may include a processor for executing computer code, memory, a display, and an input device such as a keyboard, mouse and/or touch screen. The secure email module may be in the form of program code installed on the device. For example, the secure email module may be a plugin to a general purpose email application, or stand-alone application installed on the device.

However, particularly in the case of the recipient, it may be desirable for the user not to have to install a module on their device. Thus the module may be part of a secure website accessed by a browser installed on a user device.

Embodiments of this invention may allow an interrogating party to gain an understanding of factors such as the number, frequency and nature of connections and the success or failure rate of associated communication challenges. This in turn may allow the interrogating party to make decisions about whether and how to send a secure email, or as part of an assessment as to the associated user's creditworthiness or credentials. However, by virtue of the secure email system described above, anonymity of the contributing factors to an individual's security metric can be maintained.

The security metric module may be arranged to derive the security metric based on at least one of:

(a) a base value of the user as a node;
(b) a reflected value of nodes with whom the user is connected following a successful ID verification;
(c) the number of nodes and their cumulative value as confirmed identity parties;
(d) the frequency of communication between the user and its connected nodes;
(e) how recently the user has communicated securely; and
(f) the nature of nodes with whom the user is connected following a successful ID verification.

The secure system core may further comprise means for updating a user profile to record a successful communication between a sender and a receiver, preferably with a time stamp indicating when the communication took place.

The secure system core may be arranged to communicate the security metric to another user.

According to another aspect of the present invention there is provided a secure email system comprising a secure email module in any of the forms described above, and a secure system core in any of the forms described above.

Embodiments of this invention may allow a method to be carried out by the receiver device itself and/or by a website being accessed by the receiver device.

Any of the means or steps described above may be implemented as a program module or program code in a computer program executable by a processing device.

According to another aspect of the present invention there is provided a computer program or computer program product comprising program code which, when executed on a processing device, causes the processing device to provide a secure email module or a secure system core in any of the forms described above, or to carry out a method in any of the forms described above. A storage medium storing such a computer program may also be provided.

Features of one aspect of the invention may be provided with any other aspect. Apparatus features may be provided with method aspects and vice versa.

Preferred features of the present invention will now be described, purely by way of example, with reference to the accompanying drawings, in which:

Figure 1 shows the overall architecture of a secure email system in an embodiment of the invention;
Figure 2 is a flowchart showing steps taken by a sender device when a user wishes to send a secure email;
Figure 3 illustrates the situation within the secure email system of Figure 1 once the steps of Figure 2 have been carried out;
Figure 4 shows steps carried out by a receiver device order to receive a secure email in an embodiment of the invention;
Figure 5 illustrates steps taken by a receiver device when processing an attachment;
Figure 6 illustrates steps carried out by the system core 14 during the transmission of a secure email;
Figure 7 is a flowchart illustrating send tasks which are carried out in one embodiment of the invention; and
Figures 8 and 9 are flowcharts illustrating the receive tasks which are carried out in an embodiment of the invention;
Figure 10 illustrates schematically the elements held and the processes performed by the various components of the secure email system during participation in the secure email process;
Figures 11(A) - 11(C) illustrate various steps which may be carried out by different users participating in the secure email system;
Figure 12 illustrates steps carried out by a security metric module in calculating a security metric;
Figure 13 shows an example of a multi-bit record;
Figure 14 illustrates steps taken by a sender device using a security metric; and
Figure 15 illustrates steps taken by the system core when receiving a request for a security metric.

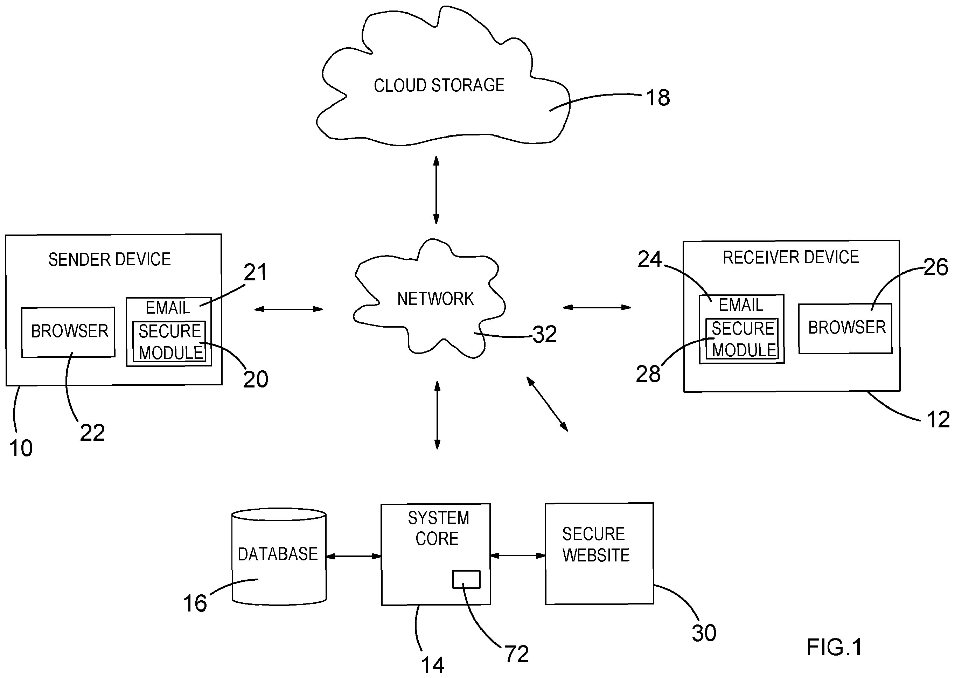

Figure 1 shows the overall architecture of a secure email system in an embodiment of the invention. Referring to Figure 1, the system comprises sender device 10, receiver device 12, system core 14, system database 16, sender repository (cloud storage) 18, and secure website 30.

In the arrangement of Figure 1, the sender device 10 may be any type of computing device capable of sending and receiving emails, such as a desktop computer, laptop, tablet device, handheld device or smartphone. Typically the device includes a processor for executing computer code, memory, a display, and an input device such as a keyboard, touch screen and/or mouse. The sender device 10 includes a secure email module 20 installed on the device. The secure email module 20 may be a plugin to an email application 21 such as Outlook (RTM) or Apple Mail (RTM), or a stand-alone application installed on the sender device 10, or any other suitable module in the form of program code. The sender device also includes a web browser 22 such as Internet Explorer (RTM), Firefox (RTM), Chrome (RTM) or Safari (RTM).

The receiver device 12 may also be any type of computing device, such as a desktop computer, laptop, tablet device or smartphone. The receiver device 12 typically includes an email application 24 and a web browser 26. However, rather than having a separate email application, the receiver device may access a web-based email service using web browser 26.

The receiver device 12 shown in Figure 1 also includes a secure email module 28, which may be installed as a plugin in the email application 24, or as a stand-alone application on the receiver device 12. However, as will be explained later, it is also possible for the receiver device 12 to receive secure emails without the secure email module 28 being installed. In this case the browser 26 is used to access the secure website 30 provided by the system administrator which performs the functions of the module 28.

The system core 14 is operated by the administrator of the secure email system. The system core 14 may be in the form of a process running on a server which is remote from both the sender device 10 and the receiver device 12. The system core 14 interacts with system database 16 which stores profiles of users of the system. The database 16 may be any form of computer storage such as one or more hard drives and/or solid-state memory. The system administrator also provides secure website 30 which is linked to the system core 14. The system core 14 may also include a secure metric module 72, as will be described later.

The sender repository may be may be any form of storage capable of being accessed by third parties. For example, the sender repository may be cloud storage 18, such as Dropbox (RTM), Google Drive (RTM), OneDrive (RTM) or iCloud (RTM). Alternatively, a user of the system or an organisation with which they are associated may provide their own storage environment which is accessible by an external third party.

The sender device 10, receiver device 12, system core 14, cloud storage 18 and secure website 30 are all connected via one or more networks 32 which is typically the Internet.

Operation of the secure email system in an embodiment of the invention is described below.

Firstly, it is necessary for the sender to register with the system. In order to achieve this, the sender device uses web browser 22 to access the secure website 30 provided by the system administrator. Once the user has registered, an account is created for that user, and the user's profile is stored in the database 16. The user then downloads and installs the secure email module 20 on their device. Alternatively, the user may first download the secure email module, and then use the module to register, or the user may be pre-registered. The user also designates the cloud storage 18 which they wish to use for secure emails. The designated cloud storage is then linked to their account in the user profile stored in database 16.

In the embodiment shown in Figure 1, the secure email module 20 is provided as a plugin to the email application 21. In this case the email application may be the user's usual or preferred email application, which can also be used to send conventional (unsecured) emails. However the secure email module 20 may also be provided as a stand-alone application, in which case the secure email module itself may perform the functions of an email client. Alternatively, the secure email module 20 may be provided as a plugin to web browser 22 to enable the user to use a web based email service.

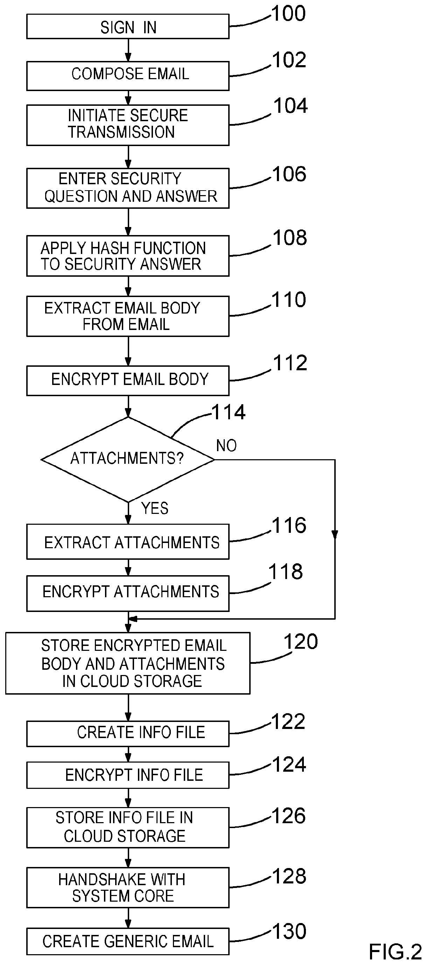

Figure 2 is a flowchart showing steps taken by the sender device 10 when the user wishes to send a secure email. Referring to Figure 2, in step 100 the sender first signs into the secure email system. This step is performed by the secure email module 20 in conjunction with the system core 14. Then in step 102 the sender composes the email. The email typically includes a subject line containing the subject of the email, an email body contain the email content, and optionally one or more attachments. In the embodiment shown in Figure 1 where the secure email module 20 is provided as a plugin to the email application 21, the email application 21 is used to compose the email. However where the secure email module is provided as a stand-alone application, the secure email module itself may be used to compose the email.

In step 104, the user initiates secure transmission of the email. This may be achieved, for example, by clicking on a "send" button which the secure email module displays on the user's screen. Of course it will be appreciated that the secure transmission may be initiated in other ways, such as through key strokes on a keyboard or by touching the appropriate area of a touch screen.

In step 106 secure email module 20 prompts the user to input a challenge and response. The challenge and response may be based on knowledge which is shared between the sender and recipient, but which is not generally known or easily obtainable. In the present embodiment the challenge and response are in the form of a security question and answer. For example, a security question could be "where did we first meet?" or "who first introduced us?". Alternatively, the question and answer pair could be based on a password agreed between the parties in advance. However, in other embodiments, alternative verification techniques such as a fingerprint reader or a hardware authentication device such as YubiKey (RTM) could be used instead.

Once the question and answer pair has been input by the sender, in step 108 the secure email module 20 performs a hash function on the answer to produce a hash value ("answer hash"). The hash function is preferably a "one way" or cryptographic hash function which is prohibitively difficult to invert. The hash function is performed using a hash key which is provided by the secure email module 20.

In step 110 the secure email module 20 extracts the email body from the rest of the email. In step 112 the sender module 20 performs an encryption process on the email body to produce an encrypted email body. The encryption process preferably uses asymmetric key cryptography as a method to encrypt the email body / attachments in a manner conducive with only granting access to the intended recipient.

In step 114 the secure email module 20 checks to see whether the email has any attachments. If there are any attachments, then in step 116 the secure email module 20 extracts these from the email. In step 118 the sender module 20 performs an encryption process on each of the attachments to produce an encrypted attachment. The encryption process preferably uses asymmetric key cryptography, with a private key being used to encrypt the attachment. The encrypted attachment can then only be decrypted with the appropriate key.

In step 120 the secure email module 20 stores the encrypted email body and the encrypted attachments (if any) in the cloud storage 18. In one embodiment, when the sender registers and links their cloud storage account, a cloud storage token is stored against their record in the system database 16. The secure email module 20 retrieves the token from their profile in the database 16 each time they send a secure email. Thus the system database 16 may store the locations of the encrypted email body and any attachments. In this case the secure email module 20 retrieves these locations from the system database 16.

In step 122 the secure email module 20 stores information in an information file for the email which is to be sent. The information file includes the following information:

- The security question
- The answer hash
- The hash key
- The location of the encrypted email body in the cloud storage
- The key which allows the email body to be decrypted
- Whether there are any attachments
- The location of the encrypted attachments (if any) in the cloud storage
- The key(s) which allow the attachments (if any) to be decrypted.

In step 124 the secure email module 20 encrypts the information file. This is preferably done using asymmetric key cryptography, with a private key being used to encrypt the information file. The information file can then only be decrypted by the appropriate key.

In step 126 the secure email module 20 stores the encrypted information file in the cloud storage 18. The location at which the encrypted information file is stored is held in the system database 16, against the sender's record.

In step 128 a handshake process takes place between the secure email module 20 and the system core 14. In this handshake process the secure email module 20 sends light touch information about the email to the system core. This light touch information includes the email addresses of the sender and recipient, the subject of the email (derived from the subject line), whether there are any attachments, and the time and date of the email. The secure email module 20 also sends the key for decrypting the information file, and the location of the information file in the cloud storage 18, to the system core 14. However the content of the email, the attachments (if any), and the information file itself are not sent to the system core.

During the handshake process, the system core 14 creates a record for the email, and generates a globally unique identifier (GUID) to identify the email and its record. The email record contains information about the email which has been sent by the sender device 10. The email record may include the following fields:

- the email addresses of the sender and recipient
- the subject of the email
- whether there are any attachments
- the time and date of the email
- the location of the information file in the cloud storage
- the key for decrypting the information file
- whether the message has been revoked by the sender.

The email record is stored in the system database 16, and can be accessed using the GUID. The GUID is also sent to and received by the secure email module 20 as part of the handshake process.

Once the handshake between the secure email module 20 and the system core 14 has taken place, in step 130 the secure email module 20 generates a generic email which is to be sent to the recipient. This generic email includes the subject of the message, the GUID identifying the message, and a link to the secure website 30. However the generic email does not contain the email body or the attachments (if any).

The generic email is then sent to the recipient by the sender device 10. In the embodiment shown in Figure 1 where the secure email module 20 is provided as a plugin to the email application 21, the email application 21 is used to send the generic email to the recipient. However where the secure email module is provided as a stand-alone application, the secure email module itself may be used to send the generic email.

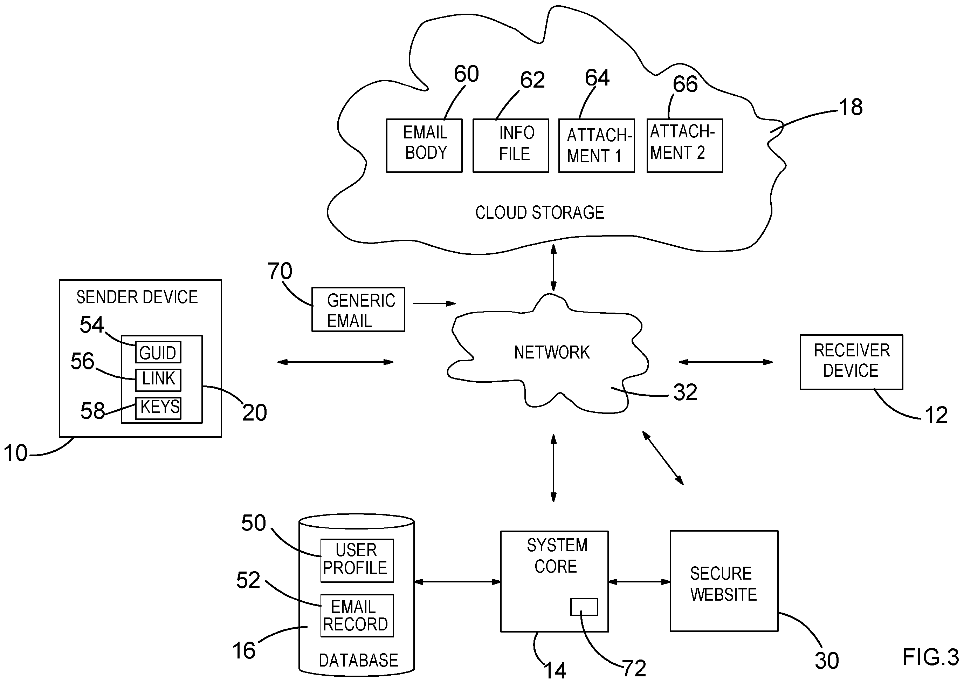

Figure 3 illustrates the situation within the secure email system of Figure 1 once the steps of Figure 2 have been carried out. Referring to Figure 3, the user profile 50 and the email record 52 as described above are stored in the system database 16. The GUID 54 and the link 56 as described above are received and processed by the secure email module 20. The secure email module 20 also references secure key storage 58 which holds the encryption/decryption keys for the email body, the attachments (if any) and the information file, as well as the answer hash key. The encrypted email body 60 and the encrypted information file 62 are stored in the cloud storage 18. Encrypted attachments 64, 66 (where present) are also stored in the cloud storage 18.

As indicated in Figure 3, a generic email 70 containing the GUID 54 and the link 56 is sent from the sender device 10 to the receiver device 12.

The arrangement described above can provide the advantage that the sender device can remain in control of the email and decide where it is stored. For example, the sender may if they wish store the email in their own networked storage device. Privacy or security issues which may arise if the system core were to store the email are avoided, because the email is not sent to the system core. Furthermore, the system core 14 can be very light, since it does not need to store actual emails or their attachments. Thus the processing and storage requirements of the system core are relatively low, which can allow a relatively low cost and easily expandable system to be provided.

In an alternative arrangement, rather than storing the encrypted information file in the cloud storage, the system core 14 may store the encrypted information file in its own secure storage, such as database 16.

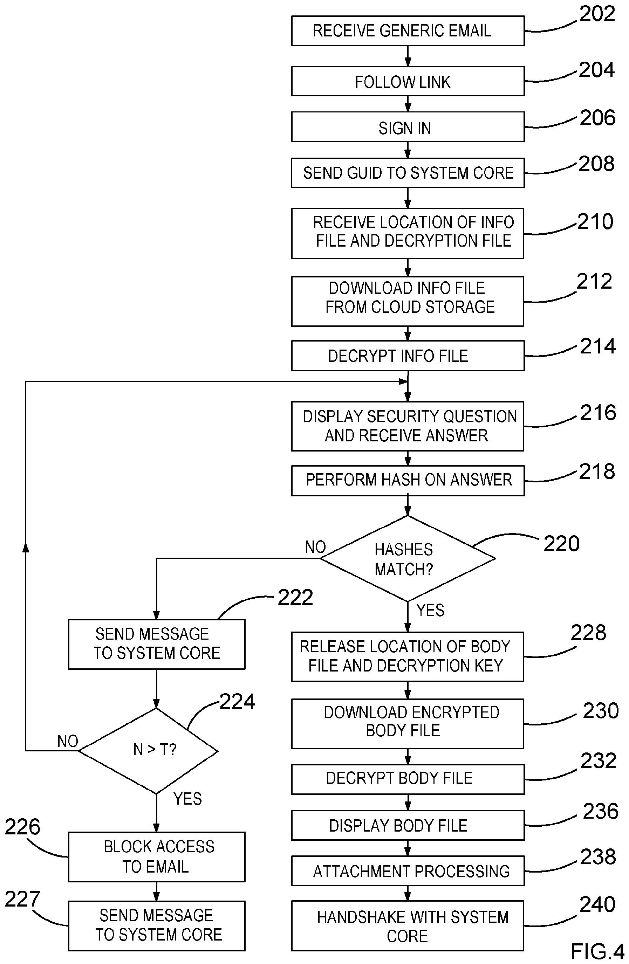

Figure 4 shows steps carried out by the receiver device 12 in order to receive a secure email in an embodiment of the invention.

Referring to Figure 4, in step 202 the generic email sent by the sender device 10 is received by the receiver device 12 using the email application 24 (or where applicable the browser 26 accessing a web-based email service). When the recipient receives the generic email they are able to see who the email is from and the subject of the email. The email also invites the recipient to follow the link in the email to access the content of the email.

If the user wishes to access the email content, then they activate the link in the generic email. In step 204, the browser 26 in the receiver device 12 is used to follow the link to the secure website 30. Alternatively, if the secure email module 28 is already installed on the receiver device 12, then the secure email module 28 is used to follow the link.

The secure email system is a closed system, and so it is necessary for the recipient to use either a secure email module 28 provided by the system administrator, or the secure website 30 controlled by the system administrator, in order to access the content of the email. It may also necessary for the recipient to sign in to the system before they can access the content, although this is configurable.

If the recipient has not previously used the system, then they are first invited to register. Alternatively, depending on the settings of the sender, it may be possible for the recipient to be pre-registered.

Once the recipient has registered, an account is created for that user by the system core 14, and the user's profile is stored in the system database 16. The recipient may also download and install secure email module 28. However it is also possible for the recipient to access the email without downloading this module. This is achieved by using the browser 26 to access the secure website 30 provided by the system administrator.

In step 206 the recipient signs in to the secure email system using either the secure module 28 or the browser 26. Once the recipient is signed in, in step 208 the secure module 28 (or the secure website 30 being accessed by the browser 26), sends the GUID received in the generic email to the system core 14. The system core 14 then uses the GUID to retrieve the record corresponding to the email from the database 16.

The system core then retrieves the location of the corresponding information file 62 in the cloud storage, and the decryption key for that information file, from the record. The location of the information file and the decryption key are then sent to the secure email module 28 (or the secure website 30 being accessed by the browser).

In step 210 the secure module 28 (or secure website 30) receives the location of the information file and the decryption key from the system core 14. In step 212 the secure module 28 (or secure website 30) uses the location of the information file to locate and download the information file 62 from the cloud storage 18.

Alternatively, if the information file is stored at or by the system core 14, then the secure module 28 (or secure website 30) receives the information file directly from the system core.

In step 214 the secure module 28 (or secure website 30) decrypts the information file using the decryption key.

Once the information file has been decrypted, it is possible to access the security question stored in the information file. Then in step 216 the secure module 28 (or secure website 30) displays the security question on the receiver device 12, and receives the answer supplied by the recipient.

In step 218 the secure module 28 (or secure website 30) performs a hash function on the answer supplied by the recipient, using the hash key contained in the information file. The hash function is the same as that performed by the sender module 20 to produce the answer hash stored in the information file.

In step 220 the secure module 28 (or secure website 30) compares the hash of the answer supplied by the recipient with the answer hash stored in the information file. If the two hashes do not match, then in step 222 a message is sent to the system core 14 indicating that the fact that an incorrect answer has been provided. The system core 14 then updates a field in the record stored in the database 16 to show that an incorrect answer has been supplied. The system core may also send a message to the sender device 10 indicating the fact that an incorrect answer has been supplied.

In step 224 the secure module 28 (or secure website 30) determines whether the number of times N that an incorrect answer has been supplied, is greater than a threshold T. The value of T is configurable and may be any natural number including zero. If the number of times an incorrect answer has been supplied does not exceed the threshold, then the fact that the answer was incorrect is indicated to the recipient, and processing returns to step 216. However if the number of times an incorrect answer has been supplied does exceed the threshold, then in step 226 the secure module 28 (or secure website 30) blocks access to the email for that recipient. In step 227 a message is sent to the system core indicating that the sender has been blocked. The system core then updates the email record 52 to indicate that the recipient has been blocked.

If on the other hand in step 220 it is determined that the two hashes match, then it is deemed that the recipient is the intended recipient of the email. Then in step 228 the decryption key for the body file and the location of the body file within the cloud storage 18 are released from the information file.

In step 230 the secure module 28 (or secure website 30) downloads the encrypted body file from the cloud storage 18 using the location released from the information file. In step 232 the secure module 28 (or secure website 30) decrypts the body file using the decryption key released from the information file. In step 234 the body of the email is displayed to the recipient using the email application 24 or the web browser 26.

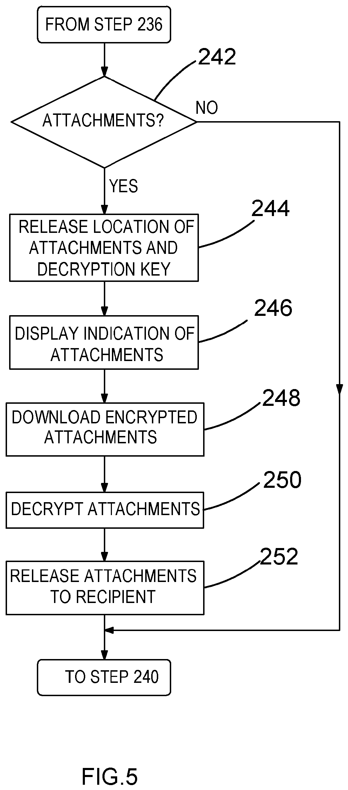

In step 236 the secure module 28 (or secure website 30) processes any attachments as described below with reference to Figure 5.

In step 238 the secure module 28 (or secure website 30) performs a handshake process with the system core 14. As part of this handshake process, the secure module 28 (or secure website 30) informs the system core 14 that the recipient has answered the security question, and that the location of the body file and the body file key have been released to the recipient. The time and date at which this happened are also transmitted to the system core. The system core 14 then updates the email record 52 stored in the system database 16, in order to keep a log of who has accessed the email and when. The system core 14 may also indicate to the sender device 10 that the email has been accessed. This allows the sender to keep track of who has received the email and when.

Figure 5 illustrates steps taken by the receiver device 12 when processing an attachment. The steps of Figure 5 correspond to the attachment processing step 236 of Figure 4. Referring to Figure 5, in step 242 the secure module 28 (or secure website 30) determines whether there are any attachments from the information contained in the information file. If there are any attachments, then in step 244 the location of each attachment within the cloud storage 18, and the decryption key for each attachment, are released from the information file. In step 246 the attachments are indicated to the recipient, for example by displaying an icon representing each attachment. When the recipient tries to open an attachment, for example by clicking on an attachment icon, then in step 248 secure module 28 (or secure website 30) downloads the attachment from the cloud storage 18 using the location released from the information file. In step 250 the secure module 28 (or secure website 30) decrypts the attachment using the decryption key released from the information file. In step 252 the attachment is released to the recipient.

In the system described above the secure email module 28 may also be operable to send a secure email, in the way described above with reference to Figures 2 and 3. Similarly, the secure email module 20 may also be operable to receive an email in the way described above with reference to Figures 4 and 5. Thus each of the devices 10, 12 may be operable to send and receive secure emails. Preferably the secure email module 28 is operable to perform the same or similar functions as the secure email module 20 (although it may operate on a different type of device).

An advantage of the system described above is that the sender device can remain in control of the email, since the email is held in encrypted form in a storage location designated by the sender. If the sender wishes to revoke the email, the secure module 20 sends a message to the system core 14 indicating that the email is to be revoked. The system core 14 then updates a revoked flag in the email record 52 stored in the database 16 to indicate that the email has been revoked. If the email is indicated as being revoked, the system core will prevent release of the location of the information file or any decryption keys to the receiver device. Without this information it is not possible for the recipient to access the email body or the attachments.

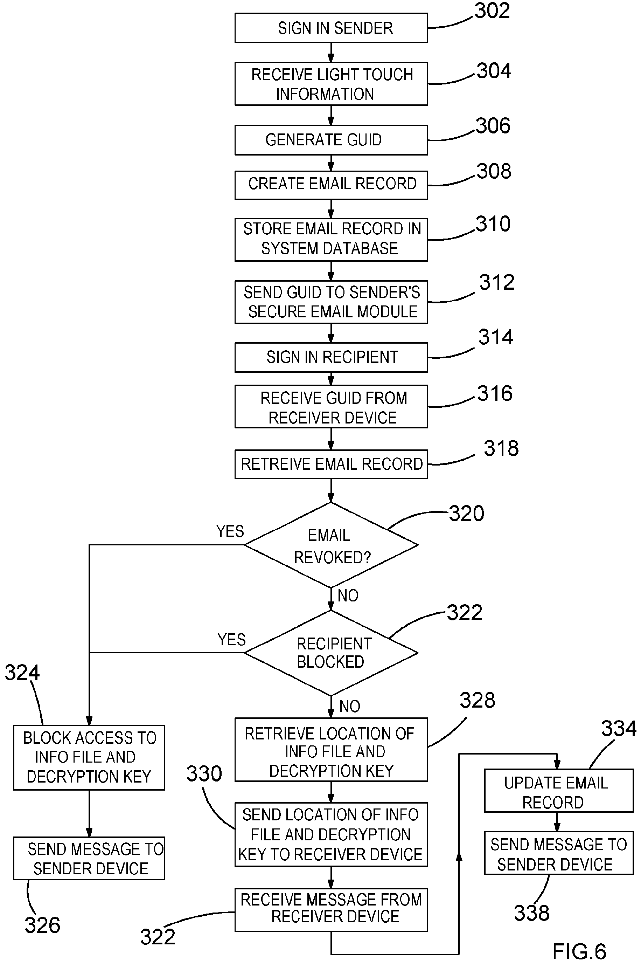

Figure 6 illustrates steps carried out by the system core 14 during the transmission of a secure email.

In step 302 the core system signs in the sender of the email to the secure email system.

In step 304 the system core 14 receives light touch information about the email which is to be sent as part of a handshake process. This light touch information includes:

• the email addresses of the sender and recipient
• the subject of the email
• the time and date of the email
• whether there are any attachments
• the location of the information file
• the key for decrypting the information file

In step 306 the system core 14 generates a globally unique identifier (GUID) to identify the email.

In step 308 the system core 14 creates a record for the email. The email record contains the following fields:

- the email addresses of the sender and recipient
- the subject of the email
- the time and date of the email
- whether there are any attachments
- the location of the information file in the cloud storage
- the key for decrypting the information file
- whether the message has been revoked by the sender

In step 310 the system core 14 stores the email record 52 in the system database 16 such that it can be accessed by the system core using the GUID.

In step 312 the system core 14 sends the GUID to the secure email module 20 as part of the handshake process.

In step 314 the system core 14 signs in the recipient to the secure email system.

In step 316 the system core 14 receives the GUID (obtained from the generic email) from the receiver device 12. In step 318 the system core 14 uses the GUID to retrieve the email record 52 corresponding to the email from the database 16.

In step 320 the system core checks the revoked flag in the email record 52 to see whether the email has been revoked by the sender. If the email has not been revoked, then in step 322 the system core 14 checks whether access to the email by the recipient is blocked. If the email has been revoked or the recipient is blocked, then in step 324 the system core restricts access to the location of the information file and any associated decryption key for the information file to suppress access to the email on the part of the recipient. In step 326 the system core 14 sends a message to the sender device indicating that an attempt has been made to access the email but the email is revoked or the sender is blocked.

If the email has not been revoked and the recipient is not blocked, then in step 328 the system core 14 retrieves the location of the information file, and the associated decryption key for that information file, from the email record 52. In step 330 the system core 14 sends the location of the information file and the decryption key to the secure email module 28 (or the secure website 30 being accessed by the browser).

In step 332 the system core 14 receives a message from the secure module 28 (or secure website 30) indicating that the recipient has answered the security question, that the location of the body file and the body file key have been released to the recipient, and the time and date at which this happened. In step 334 the system core 14 then updates the email record stored in the system database 16, in order to keep a log of who has accessed the email and when.

In step 338 the system core 14 sends a message to the sender device 10 indicating that the email has been accessed, and the time and date at which this happened.

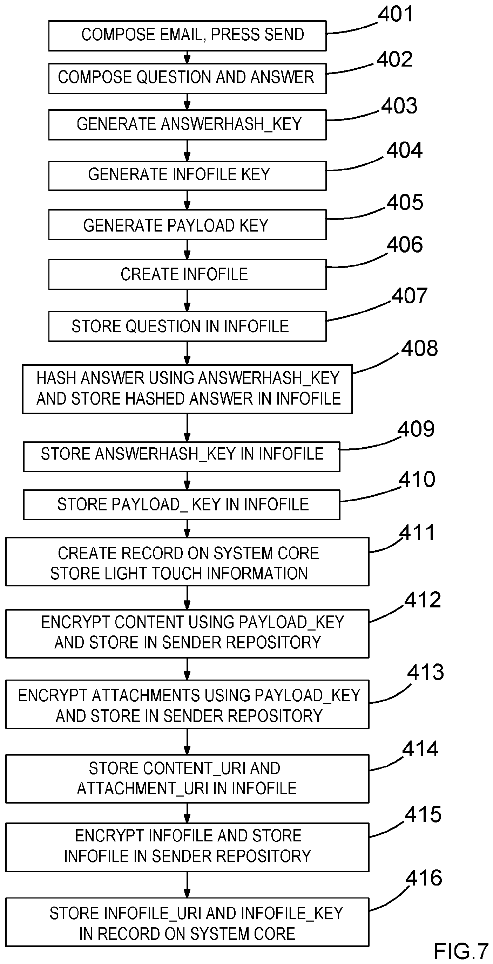

Figure 7 is a flowchart illustrating send tasks which are carried out in one embodiment of the invention. In this embodiment the sender uses a secure email module which is provided as a plugin to an email application.

Referring to Figure 7, in step 401 the sender composes a message using the email application, adds attachments as required and presses SEND. In step 402 the sender composes challenge question and answer pair and presses OK. In step 403 the plugin generates a hash key for the answer, ANSWERHASH_KEY. In step 404 the plugin generates an encryption key for the information file, INFOFILE_KEY. In step 405 the plugin generates an encryption key for the email payload, PAYLOAD_KEY. In step 406 the plugin creates an information file, INFOFILE. In step 407 the plugin stores the sender's question in INFOFILE. Depending on the implementation, the question may or may not be encrypted. In step 408 the plugin hashes the sender's answer using ANSWERHASH_KEY and a hashing algorithm such as SHA512 to yield HASHED_ANSWER and stores HASHED_ANSWER in INFOFILE. In step 409 the plugin stores ANSWERHASH_KEY in INFOFILE. In step 410 the plugin stores PAYLOAD_KEY in INFOFILE. In step 411 the plugin creates a record RECORD on the system core indexed by a GUID and stores light touch information such as subject, to and from email addresses and attachment status (Y/N) in the record. In step 412 the plugin encrypts the email content using an encryption algorithm such as AES256 and PAYLOAD_KEY and stores the encrypted content in the sender repository (e.g. cloud storage). In step 413 the plugin encrypts the email attachments using an encryption algorithm such as AES256 and PAYLOAD_KEY and stores each encrypted attachment separately in the sender repository. In step 414 the plugin stores the Uniform Resource Identifier (URI) of the content, CONTENT_URI, and those of any attachments, ATTACHMENT_URI (may be multiple instances) in INFOFILE. In step 415 the plugin encrypts INFOFILE using an encryption algorithm and INFOFILE_KEY, and stores the encrypted INFOFILE in the sender repository. In step 416 the plugin stores the URI of the information file, INFOFILE_URI and INFOFILE_KEY on the system core against the database record indexed by the GUID.

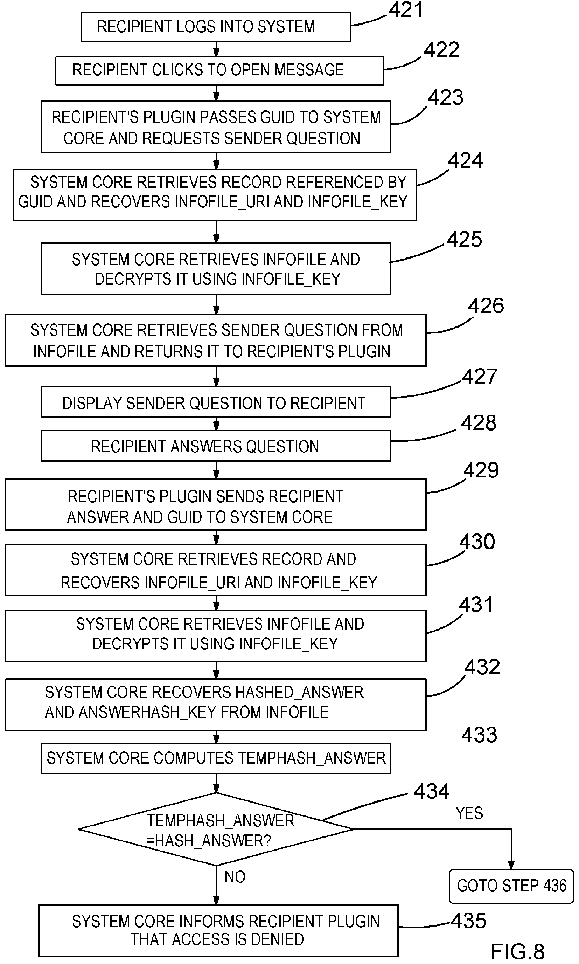

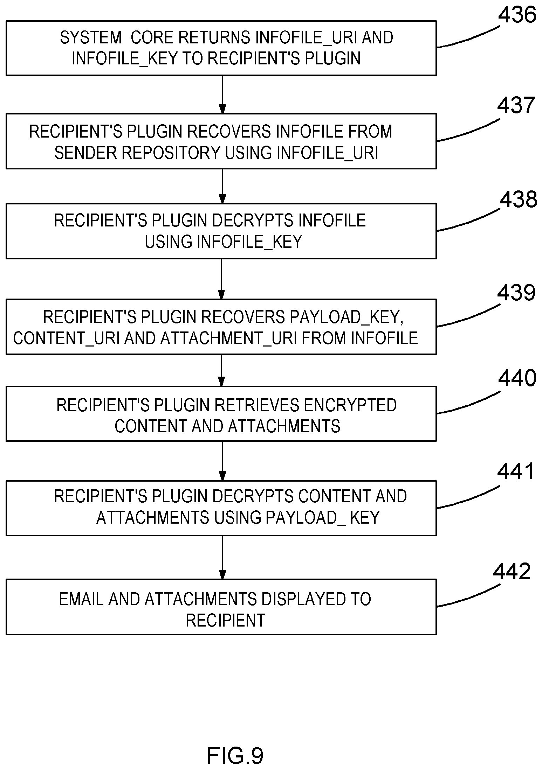

Figures 8 and 9 are flowcharts illustrating the receive tasks which are carried out in an embodiment of the invention. In this embodiment the recipient uses a secure email module which is provided as a plugin to an email application. In this embodiment, the system core rather than the secure email module is used to determine whether or not a correct answer has been supplied.

Referring to Figure 8, in step 421 the recipient logs in to the system. In step 422 the recipient clicks to open a secure email message. In step 423 the recipient's plugin requests the sender question from the system core, passing in the GUID reference to identify the specific email. In step 424 the system core retrieves the specific database record referenced by the GUID and recovers INFOFILE_URI and INFOFILE_KEY. In step 425 the system core retrieves the INFOFILE, decrypts it using a decryption algorithm (for example, AES256) and the INFOFILE_KEY. In step 426 the system core recovers the sender question from the INFOFILE and returns the sender question to the recipient's plugin. In step 427 the recipient's plugin displays the sender question to the recipient. In step 428 the recipient answers the sender question and presses OK.

Until this point, the send tasks and receive tasks in this embodiment correspond generally to those described above with reference to Figures 2 and 4-6. However, in the present embodiment, the system core 14 rather than the secure email module is used to determine whether or not a correct answer has been supplied.

Still referring to Figure 8, in step 429 the recipient's plugin sends the recipient's answer to system core, referenced by the GUID identifying the specific email. In step 430 the system core retrieves the specific database record referenced by the GUID and recovers INFOFILE_URI and the INFOFILE_KEY. In step 431 the system core retrieves the INFOFILE and decrypts it using the INFOFILE_KEY. In step 432 the system core recovers the sender's HASHED_ANSWER and the ANSWERHASH_KEY from the INFOFILE. In step 433 the system core computes a TEMPHASH_ANSWER by hashing the answer sent to it by the recipient's plugin (in step 429) using ANSWERHASH_KEY. In step 434 the system core compares TEMPHASH_ANSWER to HASHED_ANSWER. If the comparison fails, in step 435 the system core alerts the recipient's plugin that access to the email is denied. If on the other hand the comparison passes then processing proceeds to step 436 in Figure 9.

Referring to Figure 9, if the comparison passes, then in step 436 the system core returns the INFOFILE_URI and the INFOFILE_KEY to the recipient's plugin. In step 437 the recipient's plugin recovers the encrypted INFOFILE from the sender repository using the INFOFILE_URI. In step 438 the recipient's plugin decrypts the INFOFILE using the INFOFILE_KEY. In step 439 the recipient's plugin recovers the PAYLOAD_KEY, CONTENT_URI and ATTACHMENT_URI (may be multiple) from the INFOFILE. In step 440 the recipient's plugin retrieves the encrypted CONTENT and ATTACHMENT(S). In step 441 the recipient's plugin decrypts the CONTENT and ATTACHMENT(S) using PAYLOAD_KEY. in step 442 the email and any attachments are displayed to the recipient using the recipient's email application.

In another embodiment of the invention, rather than the INFOFILE_KEY being handled by the system core, the sender's plugin and the recipient's plugin may jointly establish INFOFILE_KEY using a key exchange technique such as the Diffie-Hellman Key Exchange.

This can allow the INFOFILE_KEY to be established without being known to third parties, or to the system core. This embodiment can avoid the need to store the INFOFILE_KEY for multiple users at the system core. Thus in this embodiment the system core is used to coordinate activities between the sender and the receiver, but without storing keys which could potentially be used to access confidential information.

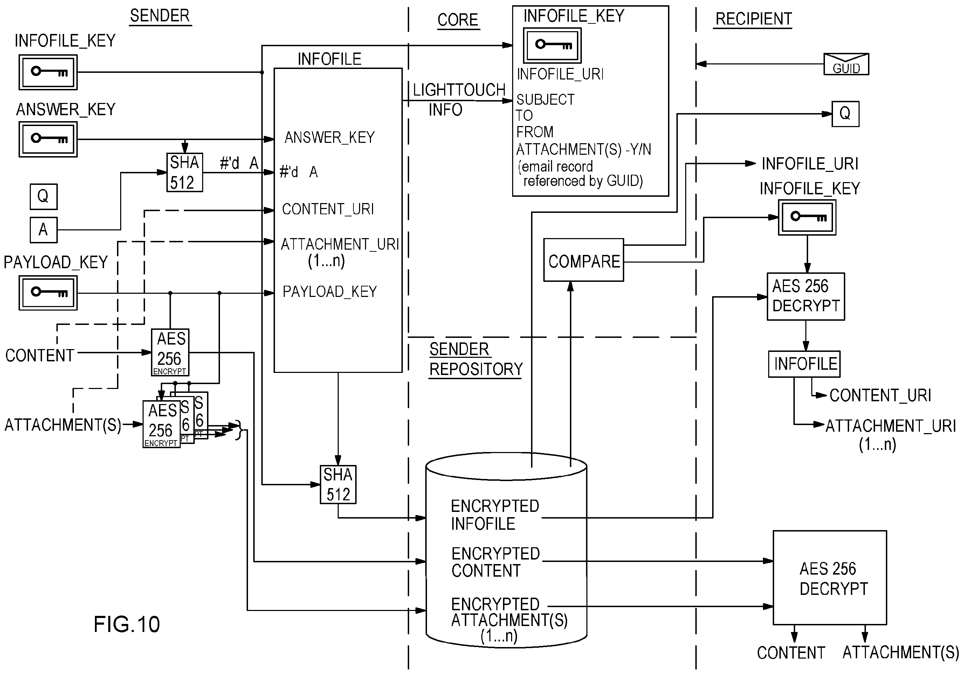

Figure 10 illustrates schematically the elements held and the processes performed by the various components of the secure email system during participation in the secure email process.

**Security metric**

The secure email system described above can enable consumer and corporate users to encrypt and send email securely whilst simultaneously verifying the target recipient's identity; only when the recipient's identity has been verified to a degree of certainty determined by the sender are the secure email content and attachments released for viewing on behalf of the sender. The system may also provide client side "adapters" (executable applications that seamlessly integrate with existing email systems, such as secure email modules 20, 28 illustrated in Figure 1) to allow users to perform the described functions.

In a preferred embodiment of the invention, the secure email system is further adapted to allow third parties to make inferences about the trustworthiness of the user, without necessarily having been party to email exchanges with the user. In this embodiment, the system core 14 is arranged to keep a record of a user's participation in the secure email system, and to associate a value with that participation. This value can be used by third parties to assess the degree to which a user has been authenticated which may provide, amongst other things, an indication of the trustworthiness of a user. If desired, certain actions may be taken (or not taken) in dependence on this value.

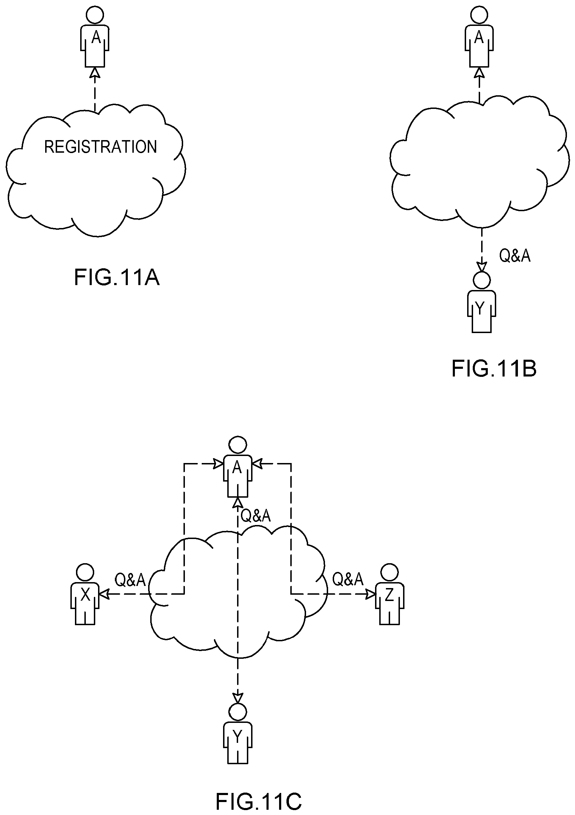

An example of how this aspect of the system may operate will now be described, with reference to Figures 11A - 11C.

Figure 11(A) illustrates a user A enrolling as a user of the system. In one embodiment, the user A provides the following registration parameters:

- Forename(s)
- Surname(s)
- Email address(es)
- Postal code(s)
- Mobile telephone number(s)

These might be considered as "cornerstone" identity parameters. The secure email system then creates a user profile 50 for the user which is stored in the database 16 (see Figure 3). The user profile contains the registration parameters, along with other information concerning that particular user. A unique identifier is used to identify the user and their user profile.

As part of the registration process, the secure email system associates a base value with the user. The base value is a metric which reflects the nature of the user; for example, whether the user is an individual, an enterprise, a bank, a government department, and so forth. This value is stored or associated with the user profile 50 in the database 16.

User A then downloads and installs an adapter 20 on their device. When they wish to send an email, they compose email content on their device (appending attachments as required) and define the email address applicable to their intended recipient(s).

Figure 11(B) illustrates the user A communicating securely with a user Y. User A elects to send the email communication securely, invoking the adapter 20 via a button hosted within their existing email client.

User A's adapter 20 prompts user A (the sender) to define identity challenge parameters to verify user Y's (the recipient's) identity. User A defines these parameters with a view to establishing the recipient's identity to a degree of certainty that they, as the sender, are comfortable with. In its simplest form, this may be a question and answer pair.

The adapter 20, being integrated with user A's systems, is able to send a secure email to user Y at the specified email address, this emanating directly from the sender's email address.

On receipt of the secure email, user Y registers to become a member of the secure email system (providing the "cornerstone" registration details listed above). User Y is then prompted to meet user A's challenge, either by way of an adapter 28 (if installed by the recipient), or via a web browser.

If user Y (the recipient) is able to meet the challenge set by user A (the sender), then the encrypted email is released to the recipient, decrypted and presented for viewing.

At this point, the system core 14 knows the following information about both user A and user Y:

- Forename
- Surname
- Email address(es)
- Post Code(s)
- Mobile Phone Number

**[0169]** The system core 14 may now make the following assertions:

- User A has verified the identity of user Y to a degree of certainty that they are comfortable with and that they have been able to determine via the challenge; and
- User Y knows user A having satisfactorily met user A's challenge.

Figure 11(C) illustrates users A, X, Y & Z now communicating using the secure email system. Each user may be considered as a node in a network. In this example, users A and Y are consumer nodes, while users X and Z are corporate or "enterprise" nodes. The secure email system enables organisations X and Z to host their encrypted email content and the associated challenge parameters within their own secure repositories.

In this example, user Z is a bank which, given its procedures as associated with challenge parameters used to secure their customer's ID, is considered a "high value" node. User Z (the bank) is able to confirm user A's (the consumer) identity using exactly the same identity verification procedures already in use within their banking processes (e.g. telephone or Internet banking processes). This is because the secure email system allows the sender to host and retain full control of the challenge without exposing these parameters to anyone; not even the system core.

In facilitating a secure email communication from user Z (the bank) to user A (the consumer), the system core 14 is able to assert that user A's identity has been satisfactorily verified by user Z (the bank) without being party to any of the details of the challenge parameters or indeed to the email content itself.

A measure or metric may then be attributed to each user within the network with the value assigned to it dependent upon factors derived from a combination of the following non-limiting examples:

- The base value of the user as a node.

- The reflected value of nodes with whom a user is connected following a successful ID verification.

- The number and nature of nodes and their cumulative value as confirmed identity parties.

- The frequency of communication between the user and its connected nodes.

- The frequency of communication between the connected nodes and the user.

- The level and nature of security set for the communications between users.

- How recently the user has communicated securely.

- The nature of nodes with whom the user is connected following a successful ID verification.

This metric can be used by third parties to assess the degree of authentication of a user. If desired, certain actions may be taken (or not taken) in dependence on the value of this metric, for example, automatically selecting the level of security required in future communications.

It will be appreciated that the ability to derive this metric is made possible by virtue of the technology described above, which allows the sender to remain in control and to retain anonymity of its challenge parameters as well as the email payload.

Technically, the process described above may be implemented as follows.

Referring back to Figures 1 and 3, the sender device 10 uses the adapter (secure email module) 20 in order to encrypt the message content, any attachments and the associated ID challenge parameters and to deposit these message elements, along with associated referencing information, on their hosted cloud storage 18.

An email including a unique reference GUID 54 and link 56 is dispatched by the sender device 10 to the recipient's email address. On receiving the email into their device 12, the recipient clicks the unique link 56 and invokes the read process described with reference to Figure 4. The recipient can only access the secure content by way of a validated answer to the sender's identity challenge. If the challenge is successfully met, the system core 14 makes available the decryption key and releases the location of the referenced email content and any attachments.

The system core 14 then updates the email record 52 stored in the system database 16, in order to keep a log of who has accessed the email and when. The user profile 50 is also updated, in order to record the fact that the sender and receiver have successfully communicated, together with a time stamp indicating when the communication took place.

The security metric module 72 then derives the variables noted above and combines them algorithmically to yield a security metric. The security metric is then associated with the user's identity, in the user profile 50. Each user's security metric is recalculated on an ongoing basis as secure messages are exchanged.

Although the system core 14 is aware that an ID verification process has taken place and the outcome of that verification process (success or failure) it is not a party to any of the following:

- the challenge set by the sender to verify the recipient's identity;
- the expected response to the challenge, also set by the Sender;
- the response returned by the recipient in meeting the challenge.

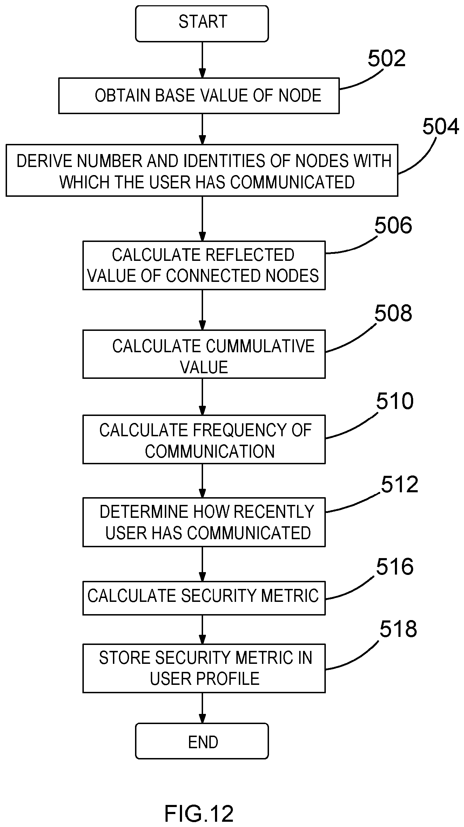

Figure 12 illustrates steps carried out by the security metric module 72 in calculating the security metric. Referring to Figure 12, in step 502 the module 72 derives the base value of the node from the user profile 50 stored in the database 16. In step 504 the module 72 derives the number of nodes with which the user has communicated, together with the identities of those nodes. This is done by querying the user profile 50.

In step 506 the reflected values of the nodes with which the user is connected following a successful ID verification are calculated. In this context a reflected value may be an incremental value attributed to a user's base value, as derived from weighted base values of its connected nodes. In order to calculate the reflected values, the security metric module 72 queries the user profiles of the nodes with which the user has successfully communicated, and obtains the base values of those nodes, as well as information concerning their connected nodes. The reflected value may then be calculated based on this information. In step 508 a cumulative value of the nodes with which the user has communicated as confirmed identity parties is calculated. This is done by combining the relevant reflected values.

In step 510 the frequency of communication between the user and its connected nodes is calculated from the records stored in the user profile 50. In step 512 it is determined, from the records stored in the user profile 50, how recently the user has communicated securely.

In step 514 a security metric is calculated by combining the values obtained in steps 502 through 512. For example, each of the values described above could be combined through addition and/or multiplication, in each case with an appropriate weighting factor. In step 516 the security metric is stored as part of the user profile 50 in the database 16.

The security metric is made available to external third parties as a measure of an individual's identity and credibility, these being inferred by their connection and communication with other third parties. Whether consumer or enterprise, these connections act as a gauge of the integrity of an individual's identity, connecting their online and offline personas: a form of "crowd authentication".

The calculation of the security metric uses widely accepted mathematical models and analysis of networks, whereby the users, be they consumers or corporates, are represented by nodes in the network or graph. Communications between users are represented graphically by lines connecting them called edges. Mathematically this network is represented using an adjacency matrix, which in this case may be represented by a n x n asymmetric matrix, where n is the number of nodes in the network. The adjacency matrix has elements $A_{ij}$ which have a non-zero value if there is an edge, or communication between nodes $i$ and $j$ and a zero value if there is no edge.

The adjacency matrix might be asymmetric as it might represent a directed network, that is, one where the network will record not only the fact that a communication has been made between users, but also the direction of that communication.

The network edges are weighted to take into consideration the factors described above such as base value, security challenge settings, frequency of communications.

To illustrate the above, consider the situation where a customer, represented by node, $i$, communicates with a bank, represented by node, *j,* via open email. Then, in the adjacency matrix, the element $A_{ij}$ might have a value of 1 and the element $A_{ji}$ would have a value of 0. However, when the bank replies to the customer, using a highly secure challenge setting, then the element Aij would remain unchanged at 1 but the element $A_{ji}$ would have a non-zero value such as 3, representing the higher weighting offered due to the security setting of the communication.

For the analysis of the network data to establish the 'trustworthiness' of a node, we use a centrality measure to take into consideration the number and quality of connections a node may have. Given the weighting associated with the edges an eigenvector centrality function might be appropriate. This helps to reflect that communications with established trustworthy individuals or institutions are valued more highly than communications with unverified individuals. In the case of an asymmetric adjacency matrix the calculation may be adjusted to use alpha centrality rather than eigenvector centrality.

Using eigenvector centrality, if we denote the security metric of a node *i* by $x_i$, then we can allow for the proportionality to the average metric of *i*'s network:

$$X_i = \frac{1}{\lambda} \sum_{j=1}^{n} A_{ij} x_j$$

Where λ becomes the largest eigenvalue and the vector, x = $(x_1, x_2, ....)$ is an eigenvector of the adjacency matrix given that we can rewrite the equation in matrix form as

$$\Lambda x = A \cdot x$$

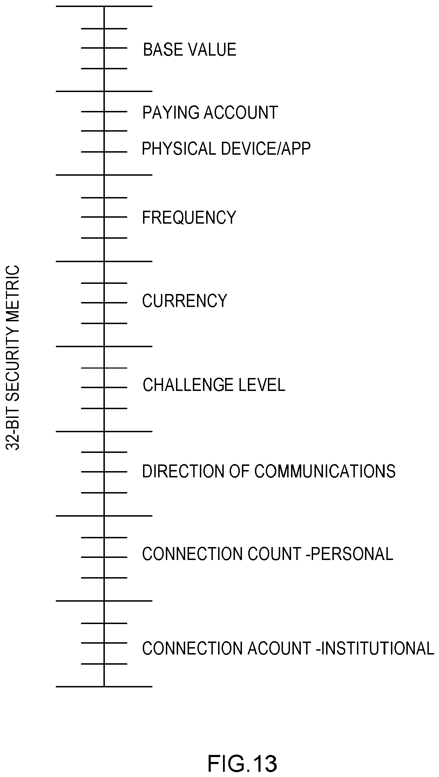

In addition to the total security metric as described above, the output of the security metric module may also be in the form of a multi-bit (for example, 32-bit) record associated with the user or node profile. Such a multi-bit record maintains qualitative information affecting the security metric in addition to the score itself without revealing the detail of the communications made. This multi-bit record may be organised in such a way as to contain information such as information about the connection count, split between individuals and institutions, direction of conversations, challenge levels sets, currency of communications, frequency of communications, and/or whether a user has a paid for account, and as a result has been further verified by way of bank details. An example of such a multi-bit record is illustrated in Figure 13.

Given a security metric value and/or multi-bit record for their target recipient, a sender might choose to vary their ID process at the point of authoring and sending a secure communication.

As an example, an individual consumer, with a low security metric, may receive a secure communication from their bank, which has a high security metric. The secure email system allows the bank to verify the recipient's ID using their existing verification parameters without sharing them externally (even with the secure email system). This effectively raises the value of the security metric of the consumer recipient.

The security metric can be interrogated/interpreted by a third party without contravening the anonymity of the contributing verification factors and parties.

If desired, an adaptor (secure email module) 20 in a sender device 10 is arranged to perform, or not to perform, certain actions in dependence on the value of the security metric of the party with which the sender is to communicate.

As an example, the adaptor may set a level of ID validation that is required before the recipient can access the electronic message. For example, the adaptor could require that a challenge/response is used if the value of the security metric is below a threshold, but not require a challenge/response if the value of the security metric is above the threshold. The adaptor may also set the number of challenges that are required, out of a plurality of possible challenges. Thus the adaptor may automatically set the number and/or nature of challenges that are required, based on the value of the security metric.

Alternatively, the adaptor could require the value of the security metric to be above a threshold before a secure email is sent.

As another example, the adaptor could set an encryption level of the email payload in dependence on the value of the security metric. Thus a lower level encryption, which is less secure but requires less processing, could be used if the security metric is relatively high, while a higher level encryption, which is more secure but requires more processing, could be used if the security metric is relatively low.

By way of a user interface, the secure email module could use the security metric output of the secure metric module to present the user with a traffic light system as a rapid and simple indication of the crowd authentication status of the intended recipient. For example, the red light might signify that a recipient is not known to the sender and has not been crowd authenticated so a high challenge level must be used, whereas a green light might indicate the recipient has been crowd authenticated to a satisfactory level and a lower level of challenge setting may be applied. An amber light might indicate that an intermediate level of security is required. Of course, it will be appreciated that that different quantization levels and other ways of presenting the information may be used instead.

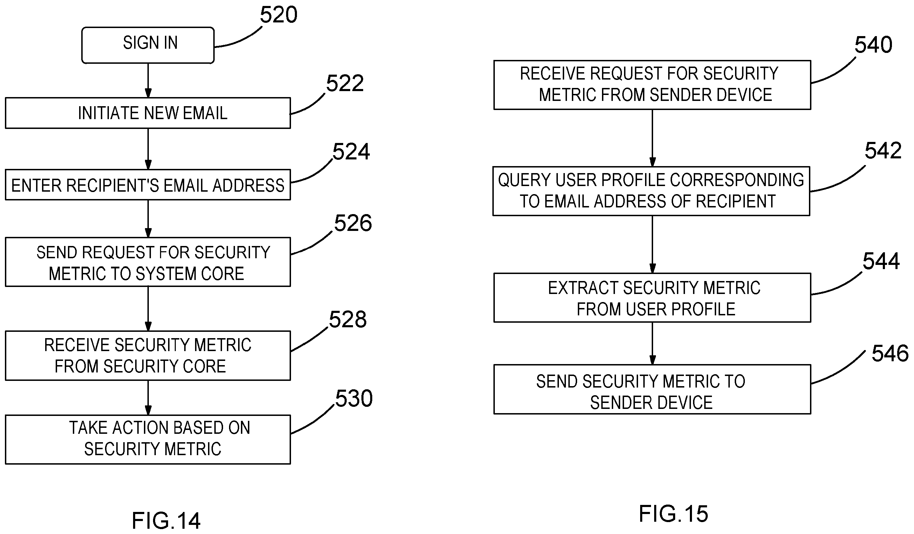

Figure 14 illustrates steps taken by a sender device 10 using the security metric described above in one embodiment. Referring to Figure 14, in step 520 the sender signs in to the secure email system. In step 522 the sender initiates a new email communication, for example, by clicking on a "new email" button. In step 524 the sender enters the recipient's email address. In step 526 the sender device sends a request for a security metric to the system core. The request for a security metric includes the email address of the sender and that of the recipient. In step 528 the sender device receives the security metric corresponding to the recipient from the secure core. In step 530, the sender device takes the appropriate action based on the security metric received from the secure core. For example, the secure email module 20 in the sender device may set the security level of the email in dependence on the value of the security metric.

In one example, if the security metric is below a certain threshold, then the secure email module may require the sender to follow the secure email process illustrated in Figure 2 (step 102 onwards) in order to communicate with the recipient. However, if the security metric is below the threshold, then the secure email module may allow the user to use a less secure form of communication, for example without a challenge and response.

In another example, the secure email module 20 may chose the encryption key and/or encryption technique used to encrypt the email body and/or any attachments in dependence on the value of the security metric.

In another example, the sender device may display a "traffic light" system or some other indication of the degree of authentication of the recipient, based on the value of the security metric. As a further example, the sender device may require the user to confirm the type of communication to be used based on the security metric. Any of the above examples may be used alone or in combination with one or more of the others.

Figure 15 illustrates steps taken by the system core 14 when receiving a request for a security metric. Referring to Figure 15, in step 540 the system core receives a request for a security metric. The request includes the email address of the sender and that of the recipient. In step 542 the system core queries the user profile 50 corresponding to the email address of the recipient. In step 544 the system core extracts from the user profile the security metric associated with the recipient. In step 546 the system core sends the security metric to the sender device.

It will be appreciated that the embodiment described above allows an interrogating party to gain an understanding of the number, frequency and nature of connections and the success or failure rate of associated communication challenges, but that anonymity of the contributing factors to an individual's security metric is maintained at all times.

The secure email system's unique ability to utilise a sender's ID verification parameters without ever being party to them allows the system to benefit from the successful, or otherwise, usage of these ID parameters.

In the case of an enterprise (business) sending secure communications to its clients using its existing risk policies and ID verification parameters, the enterprise (sender) might be considered a high value node in a communications network. Whilst the enterprise to consumer relationship must remain confidential, its very existence may be reflected within the security metric, and interrogated by a third party as part of their own ID verification process.

The system described above allows an assessment of the degree of authentication of a user to be made, while maintaining the anonymity of the email content and security challenge parameters. This may allow the system to maintain compliance with the appropriate data governance regulations.

It will be appreciated that any of the methods described above may suitably be carried out by computer code executing on a processor. For example, each of the sender device 10, receiver device 12 and system core 14 may include a processor, along with associated memory, with computer code arranged to carry out the appropriate methods described above.

Embodiments of the invention have been described above by way of example only, and variations in detail will be apparent to the skilled person with the scope of the appended claims. While embodiments of the invention have been described with reference to email communication, the present invention is applicable to any type of electronic messaging system such as instant messaging, personal messaging or text messaging.

**Claims**

1. A secure system core (14) for use in sending a secure electronic message from a sender device (10) to a receiver device (12) in a secure electronic message system, the secure system core (14) comprising:

    means for receiving information about an electronic message from the sender device (10);
    means for generating an identifier (54) of the electronic message;
    means for sending the identifier (54) to the sender device (10);
    means for receiving the identifier (54) from the receiver device (12);
    means for releasing to the receiver device (12) information allowing retrieval of an encrypted electronic message body (60) from a storage environment (18) accessible by third parties on receipt of the identifier (54) from the receiver device (12), wherein the information released to the receiver device (12) comprises a storage location of an encrypted information file (62), and an information file decryption key;
    a storage means (16) which stores a record of a user's participation in the secure electronic message system;
    a security metric module (72) arranged to derive a security metric associated with the user based on the record of the user's participation in the secure electronic message system;
means for receiving a request for a security metric from a sender device (10), the request including an identifier of a user; and
means for communicating to the sender device (10) a security metric associated with the identifier in response to the request.

2. A secure system core (14) according to claim 1, wherein the security metric module (72) is arranged to perform at least one of the following:

    store the security metric in a user profile in the storage means (16); and
    update a user profile to record a successful communication between a sender and a receiver.

3. A secure system core (14) according to claim 1 or 2, wherein the security metric module (72) is arranged to recalculate the security metric on an ongoing basis.

4. A secure system core (14) according to any of the preceding claims, wherein the security metric module (72) is arranged to communicate the security metric to another user.

5. A secure system core (14) according to any of the preceding claims, wherein the secure system core (14) comprises:
means for extracting the security metric associated with the identifier from the storage means (16), wherein the identifier is preferably an identifier of a recipient of an electronic message.

6. A secure system core (14) according to any of the preceding claims, further comprising means for creating and storing a record (52) with information about the electronic message.

7. A secure system core (14) according to any of the preceding claims, the system core (14) further comprising:

    means for receiving a user's response from the receiver device (12);
    means for extracting a response hash and a hash key from the information file;
    means for comparing the hash of the user's response with the response hash extracted from the information file in order to determine whether the user's response matches a response supplied by the sender; and
    means for sending to the receiver device (12) an indication of whether the user's response matches the response supplied by the sender.

8. A secure system core (14) according to any of the preceding claims, wherein the security metric module (72) is arranged to derive the security metric using a centrality measure to take into consideration the number and quality of connections a node may have.

9. A secure system core (14) according to any of the preceding claims, wherein the security metric module (72) is arranged to derive the security metric based on at least one of:

    (a) a base value of the user as a node;
    (b) a reflected value of nodes with whom the user is connected following a successful ID verification;
    (c) the number of nodes and their cumulative value as confirmed identity parties;
    (d) the frequency of communication between the user and its connected nodes;
    (e) how recently the user has communicated securely; and
    (f) the nature of nodes with whom the user is connected following a successful ID verification.

10. A secure system core (14) according to any of the preceding claims, wherein the security metric module (72) is arranged to provide a multi-bit record containing a plurality of parameters which contribute to the security metric.

11. A secure electronic message module (20) for use in sending an electronic message from a sender device (10) to a receiver device (12), wherein the module is arranged to store an encrypted electronic message payload in a data storage environment (18) accessible by third parties, and to store information allowing the retrieval of the encrypted electronic message payload in a secure system core (14), the module (20) comprising:

    means for extracting an electronic message payload from the electronic message;
    means for encrypting the electronic message payload, the encrypted electronic message payload being decryptable using an electronic message decryption key;
    means for storing the encrypted electronic message payload in the storage environment (18) accessible by third parties, wherein the storage environment (18) to be used is configurable by the sender;
    means for receiving a challenge and response from the sender;
    means for applying a hash function to the response using a hash key, to yield a response hash;
    means for storing the challenge, the response hash, the hash key, the electronic message decryption key, and the storage location of the encrypted electronic message payload in an information file;
means for encrypting the information file, the information file being decryptable using an information file decryption key;
means for storing the encrypted information file (62) in a storage environment (18) from which it is accessible by the receiver device (12) and/or the secure system core (14);
means for sending information about the electronic message to the system core (14);
means for receiving an identifier (54) of the electronic message from the system core (14);
means for sending a generic electronic message to the recipient, the generic email containing a link to the system core (14), and the identifier (54) of the electronic message;
means for sending a request for a security metric to the secure system core (14), the request including an identifier of a user of the system;
means for receiving a security metric in response to the request; and
means for assigning a security level to a communication with the user based on the received security metric.

12. A module according to claim 11, wherein the module is arranged to perform at least one of the following:

enforce secure communication based on the received security metric,
display a security level to a user of the module, and
set a security level used with an electronic message to be communicated to the user based on the received security metric.

13. A secure electronic message system comprising a secure system core (14) according to any of claims 1-10, and a module according to claim 11 or 12.

14. A method for use in a secure electronic message system, the method being carried out by a secure system core (14) and comprising:

receiving information about an electronic message from the sender device (10);
generating an identifier (54) of the electronic message;
sending the identifier (54) to the sender device (10);
receiving the identifier (54) from the receiver device (12);
releasing to the receiver device (12) information allowing retrieval of an encrypted electronic message body (60) from a storage environment (18) accessible by third parties on receipt of the identifier (54) from the receiver device (12), wherein the information released to the receiver device (12) comprises a storage location of an encrypted information file (62), and an information file decryption key;
storing a record of a user's participation in the secure electronic message system;
deriving a security metric associated with the user based on the record of the user's participation in the secure electronic message system;
receiving a request for a security metric from a sender device (10), the request including an identifier of a user; and
communicating to the sender device (10) a security metric associated with the identifier in response to the request.

15. A computer program or computer program product comprising program code which, when executed on a processing device, causes the processing device to provide a secure system core (14) according to any of claims 1-10 or a module according to claim 11 or 12, or a system according to claim 13, or to carry out a method according to claim 14.

**Patentansprüche**

1. Sicherer Systemkern (14) zur Verwendung beim Senden einer sicheren elektronischen Nachricht von einem Sendegerät (10) zu einem Empfangsgerät (12) in einem sicheren elektronischen Nachrichtensystem, wobei der sichere Systemkern (14) Folgendes umfasst:

Mittel zum Empfangen von Informationen über eine elektronische Nachricht von dem Sendegerät (10);
Mittel zum Erzeugen einer Kennung (54) der elektronischen Nachricht;
Mittel zum Senden der Kennung (54) zum Sendegerät (10);
Mittel zum Empfangen der Kennung (54) vom Empfangsgerät (12);
Mittel zum Freigeben von Informationen an das Empfangsgerät (12), die das Abrufen eines verschlüsselten Elektronische-Nachricht-Texts (60) aus einer Speicherumgebung (18), auf die Dritte zugreifen können, nach Empfang der Kennung (54) vom Empfangsgerät (12) ermöglichen, wobei die an das Empfangsgerät (12) freigegebenen Informationen einen Speicherort einer verschlüsselten Informationsdatei (62) und einen Informationsdatei-Entschlüsselungsschlüssel umfassen;
ein Speichermittel (16), das einen Datensatz der Teilnahme eines Benutzers an dem sicheren elektronischen Nachrichtensystem speichert;

ein Sicherheitsmetrikmodul (72), das zum Ableiten einer mit dem Benutzer assoziierten Sicherheitsmetrik auf der Basis des Datensatzes der Teilnahme des Benutzers an dem sicheren elektronischen Nachrichtensystem ausgelegt ist;

Mittel zum Empfangen einer Anforderung für eine Sicherheitsmetrik von einem Sendegerät (10), wobei die Anforderung eine Kennung eines Benutzers beinhaltet; und

Mittel zum Übermitteln einer mit der Kennung assoziierten Sicherheitsmetrik an das Sendegerät (10) als Reaktion auf die Anforderung.

2. Sicherer Systemkern (14) nach Anspruch 1, wobei das Sicherheitsmetrikmodul (72) ausgelegt ist zum Durchführen von mindestens einem von:

Speichern der Sicherheitsmetrik in einem Benutzerprofil in dem Speichermittel (16); und

Aktualisieren eines Benutzerprofils, um eine erfolgreiche Kommunikation zwischen einem Sender und einem Empfänger aufzuzeichnen.

3. Sicherer Systemkern (14) nach Anspruch 1 oder 2, wobei das Sicherheitsmetrikmodul (72) zum fortlaufenden Neuberechnen der Sicherheitsmetrik ausgelegt ist.

4. Sicherer Systemkern (14) nach einem der vorherigen Ansprüche, wobei das Sicherheitsmetrikmodul (72) zum Übermitteln der Sicherheitsmetrik an einen anderen Benutzer ausgelegt ist.

5. Sicherer Systemkern (14) nach einem der vorherigen Ansprüche, wobei der sichere Systemkern (14) Folgendes umfasst:

Mittel zum Extrahieren der mit der Kennung assoziierten Sicherheitsmetrik aus dem Speichermittel (16), wobei die Kennung vorzugsweise eine Kennung eines Empfängers einer elektronischen Nachricht ist.

6. Sicherer Systemkern (14) nach einem der vorherigen Ansprüche, der ferner Mittel zum Erzeugen und Speichern eines Datensatzes (52) mit Informationen über die elektronische Nachricht umfasst.

7. Sicherer Systemkern (14) nach einem der vorherigen Ansprüche, wobei der Systemkern (14) ferner Folgendes umfasst:

Mittel zum Empfangen einer Antwort eines Benutzers vom Empfangsgerät (12);

Mittel zum Extrahieren eines Antwort-Hash und eines Hash-Schlüssels aus der Informationsdatei;

Mittel zum Vergleichen des Hash der Antwort des Benutzers mit dem aus der Informationsdatei extrahierten Antwort-Hash, um festzustellen, ob die Antwort des Benutzers mit einer vom Sender gelieferten Antwort übereinstimmt; und

Mittel zum Senden einer Anzeige zum Empfangsgerät (12), ob die Antwort des Benutzers mit der vom Sender gelieferten Antwort übereinstimmt.

8. Sicherer Systemkern (14) nach einem der vorherigen Ansprüche, wobei das Sicherheitsmetrikmodul (72) zum Ableiten der Sicherheitsmetrik anhand eines Zentralitätsmaßes ausgelegt ist, um die Anzahl und Qualität von Verbindungen, die ein Knoten haben kann, zu berücksichtigen.

9. Sicherer Systemkern (14) nach einem der vorherigen Ansprüche, wobei das Sicherheitsmetrikmodul (72) ausgelegt ist zum Ableiten der Sicherheitsmetrik auf der Basis von mindestens einem von:

(a) einem Basiswert des Benutzers als Knoten;
(b) einem reflektierten Wert von Knoten, mit denen der Benutzer nach einer erfolgreichen ID-Verifizierung verbunden ist;
(c) der Anzahl von Knoten und deren kumuliertem Wert als bestätigte Identitätsparteien;
(d) der Häufigkeit von Kommunikationen zwischen dem Benutzer und den mit ihm verbundenen Knoten;
(e) der Zeit seit der letzten sicheren Kommunikation des Benutzers, und
(f) der Natur von Knoten, mit denen der Benutzer nach einer erfolgreichen ID-Verifizierung verbunden ist.

10. Sicherer Systemkern (14) nach einem der vorherigen Ansprüche, wobei das Sicherheitsmetrikmodul (72) zum Bereitstellen eines Multi-Bit-Datensatzes ausgelegt ist, der mehrere Parameter enthält, die zu der Sicherheitsmetrik beitragen.

11. Sicheres elektronisches Nachrichtenmodul (20) zur Verwendung beim Senden einer elektronischen Nachricht von einem Sendegerät (10) zu einem Empfangsgerät (12), wobei das Modul zum Speichern einer verschlüsselten Elektronische-Nachrichten-Nutzlast in einer Datenspeicherumgebung (18), auf die Dritte zugreifen können, und zum Speichern von Informationen ausgelegt ist, die das Abrufen der verschlüsselten Elektronische-Nachrichten-Nutzlast in einem sicheren Systemkern (14) ermöglichen, wobei das Modul (20) Folgendes umfasst:

Mittel zum Extrahieren einer Elektronische-Nachrichten-Nutzlast aus der elektronischen Nachricht;

Mittel zum Verschlüsseln der Elektronische-Nachrichten-Nutzlast, wobei die verschlüsselte Elektronische-Nachrichten-Nutzlast mittels eines Elektronische-Nachrichten-Entschlüsselungsschlüssels entschlüsselbar ist;

Mittel zum Speichern der verschlüsselten Elektronische-Nachrichten-Nutzlast in der Speicherumgebung (18), auf die Dritte zugreifen können, wobei die zu verwendende Speicherumgebung (18) durch den Sender konfigurierbar ist;

Mittel zum Empfangen einer Abfrage und einer Antwort vom Sender;

Mittel zum Anwenden einer Hash-Funktion auf die Antwort mit einem Hash-Schlüssel, um einen Antwort-Hash zu erhalten;

Mittel zum Speichern der Abfrage, des Antwort-Hash, des Hash-Schlüssels, des Elektronische-Nachricht-Entschlüsselungsschlüssels und des Speicherorts der verschlüsselten Elektronische-Nachrichten-Nutzlast in einer Informationsdatei;

Mittel zum Verschlüsseln der Informationsdatei, wobei die Informationsdatei mittels eines Informationsdatei-Entschlüsselungsschlüssels entschlüsselbar ist;

Mittel zum Speichern der verschlüsselten Informationsdatei (62) in einer Speicherumgebung (18), von der aus das Empfangsgerät (12) und/oder der sichere Systemkern (14) auf sie zugreifen kann/können;

Mittel zum Senden von Informationen über die elektronische Nachricht zum Systemkern (14);

Mittel zum Empfangen einer Kennung (54) der elektronischen Nachricht vom Systemkern (14);

Mittel zum Senden einer generischen elektronischen Nachricht zum Empfänger, wobei die generische E-Mail einen Link zum Systemkern (14) und die Kennung (54) der elektronischen Nachricht enthält;

Mittel zum Senden einer Anforderung für eine Sicherheitsmetrik zu dem sicheren Systemkern (14), wobei die Anforderung eine Kennung eines Benutzers des Systems beinhaltet;

Mittel zum Empfangen einer Sicherheitsmetrik als Antwort auf die Anforderung; und

Mittel zum Zuordnen einer Sicherheitsstufe zu einer Kommunikation mit dem Benutzer auf der Basis der empfangenen Sicherheitsmetrik.

12. Modul nach Anspruch 11, wobei das Modul ausgelegt ist zum Durchführen von mindestens einem von:

Erzwingen einer sicheren Kommunikation auf der Basis der empfangenen Sicherheitsmetrik, Anzeigen einer Sicherheitsstufe für einen Benutzer des Moduls, und

Einstellen einer Sicherheitsstufe, die mit einer an den Benutzer zu übermittelnden elektronischen Nachricht verwendet wird, auf der Basis der empfangenen Sicherheitsmetrik.

13. Sicheres elektronisches Nachrichtensystem, das einen sicheren Systemkern (14) nach einem der Ansprüche 1-10 und ein Modul nach Anspruch 11 oder 12 umfasst.

14. Verfahren zur Anwendung in einem sicheren elektronischen Nachrichtensystem, wobei das Verfahren von einem sicheren Systemkern (14) ausgeführt wird und Folgendes beinhaltet:

Empfangen von Informationen über eine elektronische Nachricht vom Sendegerät (10);

Erzeugen einer Kennung (54) der elektronischen Nachricht;

Senden der Kennung (54) zum Sendegerät (10);

Empfangen der Kennung (54) vom Empfangsgerät (12);

Freigeben von Informationen an das Empfangsgerät (12), die das Abrufen eines verschlüsselten Elektronische-Nachricht-Texts (60) aus einer Speicherumgebung (18) ermöglichen, auf die Dritte zugreifen können, nach Empfang der Kennung (54) vom Empfangsgerät (12), wobei die an das Empfangsgerät (12) freigegebenen Informationen einen Speicherort einer verschlüsselten Informationsdatei (62) und einen Informationsdatei-Entschlüsselungsschlüssel umfassen;

Speichern eines Datensatzes der Teilnahme eines Benutzers an dem sicheren elektronischen Nachrichtensystem;

Ableiten einer mit dem Benutzer assoziierten Sicherheitsmetrik auf der Basis des Datensatzes der Teilnahme des Benutzers an dem sicheren elektronischen Nachrichtensystem;

Empfangen einer Anforderung für eine Sicherheitsmetrik von einem Sendegerät (10), wobei die Anforderung eine Kennung eines Benutzers beinhaltet; und

Übermitteln einer mit der Kennung assoziierten Sicherheitsmetrik an das Sendegerät (10) als Reaktion auf die Anforderung.

15. Computerprogramm oder Computerprogrammprodukt, das Programmcode umfasst, der bei Ausführung auf einem Verarbeitungsgerät bewirkt, dass das Verarbeitungsgerät einen sicheren Systemkern (14) nach einem der Ansprüche 1-10 oder ein Modul nach Anspruch 11 oder 12 oder ein System nach Anspruch 13 bereitstellt oder ein Verfahren nach Anspruch 14 ausführt.

**Revendications**

1. Un noyau système sécurisé (14) destiné à une utilisation dans l'envoi d'un message électronique sécurisé à partir d'un dispositif expéditeur (10) vers un dispositif récepteur (12) dans un système de messagerie électronique sécurisé, le noyau système sécurisé (14) comprenant :

   un moyen de réception d'informations relatives à un message électronique à partir du dispositif expéditeur (10),
   un moyen de génération d'un identifiant (54) du message électronique,
   un moyen d'envoi de l'identifiant (54) au dispositif expéditeur (10),
   un moyen de réception de l'identifiant (54) à partir du dispositif récepteur (12),
   un moyen de libération vers le dispositif récepteur (12) d'informations autorisant la récupération d'un corps de message électronique chiffré (60) à partir d'un environnement d'espace mémoire (18) accessible par des parties tierces à la réception de l'identifiant (54) à partir du dispositif récepteur (12), où les informations libérées vers le dispositif récepteur (12) comprennent un emplacement d'espace mémoire d'un fichier d'informations chiffré (62) et une clé de déchiffrement de fichier d'informations,
   un moyen de conservation en mémoire (16) qui conserve en mémoire un enregistrement d'une participation de l'utilisateur dans le système de messagerie électronique sécurisé,
   un module de mesure de sécurité (72) agencé de façon à dériver une mesure de sécurité associée à l'utilisateur en fonction de l'enregistrement de la participation de l'utilisateur dans le système de messagerie électronique sécurisé,
   un moyen de réception d'une demande relative à une mesure de sécurité à partir d'un dispositif expéditeur (10), la demande comprenant un identifiant d'un utilisateur, et
   un moyen de communication au dispositif expéditeur (10) d'une mesure de sécurité associée à l'identifiant en réponse à la demande.

2. Un noyau système sécurisé (14) selon la Revendication 1, où le module de mesure de sécurité (72) est agencé de façon à exécuter au moins une des opérations suivantes :

   conserver en mémoire la mesure de sécurité dans un profil d'utilisateur dans le moyen de conservation en mémoire (16), et
   actualiser un profil d'utilisateur de façon à enregistrer une communication réussie entre un expéditeur et un récepteur.

3. Un noyau système sécurisé (14) selon la Revendication 1 ou 2, où le module de mesure de sécurité (72) est agencé de façon à recalculer la mesure de sécurité de manière continue.

4. Un noyau système sécurisé (14) selon l'une quelconque des Revendications précédentes, où le module de mesure de sécurité (72) est agencé de façon à communiquer la mesure de sécurité à un autre utilisateur.

5. Un noyau système sécurisé (14) selon l'une quelconque des Revendications précédentes, où le noyau système sécurisé (14) comprend :
   un moyen d'extraction de la mesure de sécurité associée à l'identifiant à partir du moyen de conservation en mémoire (16), où l'identifiant est de préférence un identifiant d'un récepteur d'un message électronique.

6. Un noyau système sécurisé (14) selon l'une quelconque des Revendications précédentes, comprenant en outre un moyen de création et de conservation en mémoire d'un enregistrement (52) avec des informations relatives au message électronique.

7. Un noyau système sécurisé (14) selon l'une quelconque des Revendications précédentes, le noyau système (14) comprenant en outre :

   un moyen de réception d'une réponse de l'utilisateur à partir du dispositif récepteur (12),
   un moyen d'extraction d'un hachage de réponse et d'une clé de hachage à partir du fichier d'informations,
   un moyen de comparaison du hachage de la réponse de l'utilisateur au hachage de réponse extrait du fichier d'informations afin de déterminer si la réponse de l'utilisateur correspond à une réponse fournie par l'expéditeur, et
   un moyen d'envoi au dispositif récepteur (12) d'une indication indiquant si la réponse de l'utilisateur correspond à la réponse fournie par l'expéditeur.

8. Un noyau système sécurisé (14) selon l'une quelconque des Revendications précédentes, où le module de mesure de sécurité (72) est agencé de façon à dériver la mesure de sécurité au moyen d'une mesure de tendance centrale afin de prendre en compte le nombre et la qualité de connexions qu'un nœud peut avoir.

9. Un noyau système sécurisé (14) selon l'une quelconque des Revendications précédentes, où le module de mesure de sécurité (72) est agencé de façon à dériver la mesure de sécurité en fonction d'au moins un élément parmi :

(a) une valeur de base de l'utilisateur en tant que nœud,

(b) une valeur réfléchie de nœuds auxquels l'utilisateur est connecté suite à une vérification d'ID réussie,

(c) le nombre de nœuds et leur valeur cumulative sous la forme de tiers d'identité confirmés,

(d) la fréquence de communication entre l'utilisateur et ses nœuds connectés,

(e) la date la plus récente à laquelle l'utilisateur a communiqué de manière sécurisée, et

(f) la nature de nœuds auxquels l'utilisateur est connecté suite à une vérification d'ID réussie.

10. Un noyau système sécurisé (14) selon l'une quelconque des Revendications précédentes, où le module de mesure de sécurité (72) est agencé de façon à fournir un enregistrement à bits multiples contenant une pluralité de paramètres qui contribuent à la mesure de sécurité.

11. Un module de messagerie électronique sécurisé (20) pour une utilisation dans l'envoi d'un message électronique à partir d'un dispositif expéditeur (10) vers un dispositif récepteur (12), où le module est agencé de façon à conserver en mémoire une charge utile de message électronique chiffré dans un environnement d'espace mémoire de données (18) accessible par des parties tierces, et à conserver en mémoire des informations autorisant la récupération de la charge utile de message électronique chiffré dans un noyau système sécurisé (14), le module (20) comprenant :

un moyen d'extraction d'une charge utile de message électronique à partir du message électronique,

un moyen de chiffrement de la charge utile de message électronique, la charge utile de message électronique chiffré étant déchiffrable au moyen d'une clé de déchiffrement de message électronique,

un moyen de conservation en mémoire de la charge utile de message électronique chiffré dans l'environnement d'espace mémoire (18) accessible par des parties tierces, où l'environnement d'espace mémoire (18) à utiliser est configurable par l'expéditeur,

un moyen de réception d'un test de question/réponse à partir de l'expéditeur,

un moyen d'application d'une fonction de hachage à la réponse au moyen d'une clé de hachage, de façon à produire un hachage de réponse,

un moyen de conservation en mémoire du test de question/réponse, du hachage de réponse, de la clé de hachage, de la clé de déchiffrement de message électronique et de l'emplacement d'espace mémoire de la charge utile de message électronique chiffré dans un fichier d'informations,

un moyen de chiffrement du fichier d'informations, le fichier d'informations étant déchiffrable au moyen d'une clé de déchiffrement de fichier d'informations,

un moyen de conservation en mémoire du fichier d'informations chiffré (62) dans un environnement d'espace mémoire (18) à partir duquel il est accessible par le dispositif récepteur (12) et/ou le noyau système sécurisé (14),

un moyen d'envoi d'informations relatives au message électronique au noyau système (14),

un moyen de réception d'un identifiant (54) du message électronique à partir du noyau système (14),

un moyen d'envoi d'un message électronique générique au récepteur, le message électronique générique contenant un lien vers le noyau système (14) et l'identifiant (54) du message électronique,

un moyen d'envoi d'une demande relative à une mesure de sécurité au noyau système sécurisé (14), la demande contenant un identifiant d'un utilisateur du système,

un moyen de réception d'une mesure de sécurité en réponse à la demande, et

un moyen d'affectation d'un niveau de sécurité à une communication avec l'utilisateur en fonction de la mesure de sécurité reçue.

12. Un module selon la Revendication 11, où le module est agencé de façon à exécuter au moins une des opérations suivantes :

réaliser une communication sécurisée en fonction de la mesure de sécurité reçue,

afficher un niveau de sécurité à un utilisateur du module, et

définir un niveau de sécurité utilisé avec un message électronique à communiquer à l'utilisateur en fonction de la mesure de sécurité reçue.

13. Un système de messagerie électronique sécurisé comprenant un noyau système sécurisé (14) selon l'une quelconque des Revendications 1 à 10 et un module selon la Revendication 11 ou 12.

14. Un procédé destiné à une utilisation dans un système de messagerie électronique sécurisé, le procédé étant exécuté par un noyau système sécurisé (14) et comprenant :

la réception d'informations relatives à un message électronique à partir du dispositif expéditeur (10),

la génération d'un identifiant (54) du message électronique,

l'envoi de l'identifiant (54) au dispositif expéditeur (10),

la réception de l'identifiant (54) à partir du dispositif récepteur (12),

la libération vers le dispositif récepteur (12) d'informations autorisant la récupération d'un corps de message électronique chiffré (60) à partir d'un environnement d'espace mémoire (18) accessible par des parties tierces à la réception de l'identifiant (54) à partir du dispositif récepteur (12), où les informations libérées vers le dispositif récepteur (12) comprennent un emplacement d'espace mémoire d'un fichier d'informations chiffré (62) et une clé de déchiffrement de fichier d'informations,

la conservation en mémoire d'un enregistrement d'une participation de l'utilisateur dans le système de messagerie électronique sécurisé,

la dérivation d'une mesure de sécurité associée à l'utilisateur en fonction de l'enregistrement de la participation de l'utilisateur dans le système de messagerie électronique sécurisé,

la réception d'une demande relative à une mesure de sécurité à partir d'un dispositif expéditeur (10), la demande comprenant un identifiant d'un utilisateur, et

la communication au dispositif expéditeur (10) d'une mesure de sécurité associée à l'identifiant en réponse à la demande.

**15.** Un programme informatique ou un produit de programme informatique contenant du code de programme qui, lorsqu'il est exécuté sur un dispositif de traitement, amène le dispositif de traitement à fournir un noyau système sécurisé (14) selon l'une quelconque des Revendications 1 à 10 ou un module selon la Revendication 11 ou 12, ou un système selon la Revendication 13, ou à exécuter un procédé selon la Revendication 14.

RECEIVER DEVICE

BROWSER — 26

EMAIL — 24

SECURE MODULE — 28

12

18 — CLOUD STORAGE

NETWORK — 32

SENDER DEVICE

EMAIL — 21

SECURE MODULE — 20

BROWSER

22

10

SECURE WEBSITE — 30

SYSTEM CORE — 72 — 14

DATABASE — 16

FIG.1

SIGN IN — 100

COMPOSE EMAIL — 102

INITIATE SECURE TRANSMISSION — 104

ENTER SECURITY QUESTION AND ANSWER — 106

APPLY HASH FUNCTION TO SECURITY ANSWER — 108

EXTRACT EMAIL BODY FROM EMAIL — 110

ENCRYPT EMAIL BODY — 112

ATTACHMENTS? — 114
NO
YES

EXTRACT ATTACHMENTS — 116

ENCRYPT ATTACHMENTS — 118

STORE ENCRYPTED EMAIL BODY AND ATTACHMENTS IN CLOUD STORAGE — 120

CREATE INFO FILE — 122

ENCRYPT INFO FILE — 124

STORE INFO FILE IN CLOUD STORAGE — 126

HANDSHAKE WITH SYSTEM CORE — 128

CREATE GENERIC EMAIL — 130

FIG.2

FIG.3

EP 3 482 546 B1

RECEIVE GENERIC EMAIL — 202

FOLLOW LINK — 204

SIGN IN — 206

SEND GUID TO SYSTEM CORE — 208

RECEIVE LOCATION OF INFO FILE AND DECRYPTION FILE — 210

DOWNLOAD INFO FILE FROM CLOUD STORAGE — 212

DECRYPT INFO FILE — 214

DISPLAY SECURITY QUESTION AND RECEIVE ANSWER — 216

PERFORM HASH ON ANSWER — 218

HASHES MATCH? — 220

NO

SEND MESSAGE TO SYSTEM CORE — 222

N > T? — 224

NO

YES

BLOCK ACCESS TO EMAIL — 226

SEND MESSAGE TO SYSTEM CORE — 227

YES

RELEASE LOCATION OF BODY FILE AND DECRYPTION KEY — 228

DOWNLOAD ENCRYPTED BODY FILE — 230

DECRYPT BODY FILE — 232

DISPLAY BODY FILE — 236

ATTACHMENT PROCESSING — 238

HANDSHAKE WITH SYSTEM CORE — 240

FIG.4

FROM STEP 236

ATTACHMENTS? — 242

NO

YES

RELEASE LOCATION OF
ATTACHMENTS AND
DECRYPTION KEY — 244

DISPLAY INDICATION OF
ATTACHMENTS — 246

DOWNLOAD ENCRYPTED
ATTACHMENTS — 248

DECRYPT ATTACHMENTS — 250

RELEASE ATTACHMENTS
TO RECIPIENT — 252

TO STEP 240

FIG.5

SIGN IN SENDER — 302

RECEIVE LIGHT TOUCH INFORMATION — 304

GENERATE GUID — 306

CREATE EMAIL RECORD — 308

STORE EMAIL RECORD IN SYSTEM DATABASE — 310

SEND GUID TO SENDER'S SECURE EMAIL MODULE — 312

SIGN IN RECIPIENT — 314

RECEIVE GUID FROM RECEIVER DEVICE — 316

RETREIVE EMAIL RECORD — 318

EMAIL REVOKED? — 320

YES → 

NO

RECIPIENT BLOCKED — 322

YES →

NO

BLOCK ACCESS TO INFO FILE AND DECRYPTION KEY — 324

SEND MESSAGE TO SENDER DEVICE — 326

RETRIEVE LOCATION OF INFO FILE AND DECRYPTION KEY — 328

SEND LOCATION OF INFO FILE AND DECRYPTION KEY TO RECEIVER DEVICE — 330

RECEIVE MESSAGE FROM RECEIVER DEVICE — 322

UPDATE EMAIL RECORD — 334

SEND MESSAGE TO SENDER DEVICE — 338

FIG.6

COMPOSE EMAIL, PRESS SEND — 401

COMPOSE QUESTION AND ANSWER — 402

GENERATE ANSWERHASH_KEY — 403

GENERATE INFOFILE KEY — 404

GENERATE PAYLOAD KEY — 405

CREATE INFOFILE — 406

STORE QUESTION IN INFOFILE — 407

HASH ANSWER USING ANSWERHASH_KEY AND STORE HASHED ANSWER IN INFOFILE — 408

STORE ANSWERHASH_KEY IN INFOFILE — 409

STORE PAYLOAD_ KEY IN INFOFILE — 410

CREATE RECORD ON SYSTEM CORE STORE LIGHT TOUCH INFORMATION — 411

ENCRYPT CONTENT USING PAYLOAD_KEY AND STORE IN SENDER REPOSITORY — 412

ENCRYPT ATTACHMENTS USING PAYLOAD_KEY AND STORE IN SENDER REPOSITORY — 413

STORE CONTENT_URI AND ATTACHMENT_URI IN INFOFILE — 414

ENCRYPT INFOFILE AND STORE INFOFILE IN SENDER REPOSITORY — 415

STORE INFOFILE_URI AND INFOFILE_KEY IN RECORD ON SYSTEM CORE — 416

FIG.7

RECIPIENT LOGS INTO SYSTEM — 421

RECIPIENT CLICKS TO OPEN MESSAGE — 422

RECIPIENT'S PLUGIN PASSES GUID TO SYSTEM CORE AND REQUESTS SENDER QUESTION — 423

SYSTEM CORE RETRIEVES RECORD REFERENCED BY GUID AND RECOVERS INFOFILE_URI AND INFOFILE_KEY — 424

SYSTEM CORE RETRIEVES INFOFILE AND DECRYPTS IT USING INFOFILE_KEY — 425

SYSTEM CORE RETRIEVES SENDER QUESTION FROM INFOFILE AND RETURNS IT TO RECIPIENT'S PLUGIN — 426

DISPLAY SENDER QUESTION TO RECIPIENT — 427

RECIPIENT ANSWERS QUESTION — 428

RECIPIENT'S PLUGIN SENDS RECIPIENT ANSWER AND GUID TO SYSTEM CORE — 429

SYSTEM CORE RETRIEVES RECORD AND RECOVERS INFOFILE_URI AND INFOFILE_KEY — 430

SYSTEM CORE RETRIEVES INFOFILE AND DECRYPTS IT USING INFOFILE_KEY — 431

SYSTEM CORE RECOVERS HASHED_ANSWER AND ANSWERHASH_KEY FROM INFOFILE — 432

SYSTEM CORE COMPUTES TEMPHASH_ANSWER — 433

TEMPHASH_ANSWER =HASH_ANSWER? — 434

YES → GOTO STEP 436

NO

SYSTEM CORE INFORMS RECIPIENT PLUGIN THAT ACCESS IS DENIED — 435

FIG.8

SYSTEM CORE RETURNS INFOFILE_URI AND INFOFILE_KEY TO RECIPIENT'S PLUGIN — 436

RECIPIENT'S PLUGIN RECOVERS INFOFILE FROM SENDER REPOSITORY USING INFOFILE_URI — 437

RECIPIENT'S PLUGIN DECRYPTS INFOFILE USING INFOFILE_KEY — 438

RECIPIENT'S PLUGIN RECOVERS PAYLOAD_KEY, CONTENT_URI AND ATTACHMENT_URI FROM INFOFILE — 439

RECIPIENT'S PLUGIN RETRIEVES ENCRYPTED CONTENT AND ATTACHMENTS — 440

RECIPIENT'S PLUGIN DECRYPTS CONTENT AND ATTACHMENTS USING PAYLOAD_ KEY — 441

EMAIL AND ATTACHMENTS DISPLAYED TO RECIPIENT — 442

FIG.9

FIG.10

FIG.11A

FIG.11B

Q&A

Q&A

Q&A

Q&A

FIG.11C

START

OBTAIN BASE VALUE OF NODE — 502

DERIVE NUMBER AND IDENTITIES OF NODES WITH WHICH THE USER HAS COMMUNICATED — 504

CALCULATE REFLECTED VALUE OF CONNECTED NODES — 506

CALCULATE CUMMULATIVE VALUE — 508

CALCULATE FREQUENCY OF COMMUNICATION — 510

DETERMINE HOW RECENTLY USER HAS COMMUNICATED — 512

CALCULATE SECURITY METRIC — 516

STORE SECURITY METRIC IN USER PROFILE — 518

END

FIG.12

BASE VALUE

PAYING ACCOUNT

PHYSICAL DEVICE/APP

FREQUENCY

CURRENCY

CHALLENGE LEVEL

DIRECTION OF COMMUNICATIONS

CONNECTION COUNT -PERSONAL

CONNECTION ACOUNT -INSTITUTIONAL

32-BIT SECURITY METRIC

FIG.13

520

SIGN IN

522

INITIATE NEW EMAIL

524

ENTER RECIPIENT'S EMAIL ADDRESS

526

SEND REQUEST FOR SECURITY
METRIC TO SYSTEM CORE

528

RECEIVE SECURITY METRIC
FROM SECURITY CORE

530

TAKE ACTION BASED ON
SECURITY METRIC

FIG.14

540

RECEIVE REQUEST FOR SECURITY
METRIC FROM SENDER DEVICE

542

QUERY USER PROFILE CORRESPONDING
TO EMAIL ADDRESS OF RECIPIENT

544

EXTRACT SECURITY METRIC
FROM USER PROFILE

546

SEND SECURITY METRIC TO
SENDER DEVICE

FIG.15

**EP 3 482 546 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006230461 A1

- US 2007086592 A1

**Non-patent literature cited in the description**

- **MAR KHENG KOK et al.** Secure Email Attachment as a Service (Seas). *the proceedings of the International Conference on Cloud Computing Research and Innovation (ICCCRI),* 2015, 106-111